# EUROPEAN PATENT SPECIFICATION

(11) **EP 3 454 503 B1**
(45) Date of publication and mention of the grant of the patent: **17.02.2021**
(21) Application number: 17792496.6
(22) Date of filing: 04.05.2017
(51) Int. Cl.: H04L 9/32, H04L 29/06, G06N 7/00, G06N 20/00

(54) **ACCOUNT COMPLAINT PROCESSING METHOD AND SERVER**
VERFAHREN UND SERVER ZUR VERARBEITUNG VON KONTOBESCHWERDEN
PROCÉDÉ DE TRAITEMENT DE RÉCLAMATION DE COMPTE ET SERVEUR

(30) Priority: 05.05.2016 CN 201610293474
(43) Date of publication of application: 13.03.2019
(73) Proprietor: Tencent Technology (Shenzhen) Company Limited, Shenzhen, Guangdong 518057 (CN)
(72) Inventor: LIU, Jie, Shenzhen, GUANGDONG 518057, (CN)
(74) Representative: Eisenführ Speiser
(86) International application number: PCT/CN2017/083050
(87) International publication number: WO 2017/190670

(56) References cited:
- EP-A1- 2 863 609
- WO-A1-2014/139097
- CN-A- 103 179 098
- CN-A- 103 188 218
- CN-A- 103 281 192
- CN-A- 104 104 656
- US-A1- 2009 089 876
- US-A1- 2010 306 821
- US-A1- 2012 215 635

## Description

This application claims priority to Chinese Patent Application No. 201610293474.9, filed with the Chinese Patent Office on May 05, 2016 and titled "ACCOUNT COMPLAINT PROCESSING METHOD AND SERVER".

### FIELD OF THE TECHNOLOGY

The present disclosure relates to the field of network technologies, or more specifically, to an account appeal processing method and a server.

### BACKGROUND OF THE DISCLOSURE

An account appeal refers to an account retrieval service that is provided by an account authority to an account owner when an account is stolen, or an account password is forgotten. When filing an account appeal, the account owner is required to submit account appeal data. After the account appeal data is verified successfully, it is determined that the account belongs to the account owner, and the account owner is allowed to change a password of the account, achieving an objective that the account owner retrieves the account.

In submitting the account appeal data, the submitted data is often incomplete, and the account owner may be required to submit account appeal data for two or more times. In addition, due to a network security problem, user data is often leak. Therefore, when stealing the account of the account owner, the account thief may steal user data of the account owner as well. To control a stolen account, the account thief often files an account appeal, and submits account appeal data.

It can be seen that, there may be multiple pieces of account appeal data for a same account, and the multiple pieces of account appeal data may be submitted by different natural persons. For example, the multiple pieces of account appeal data may not only include account appeal data submitted by an account owner, but also include account appeal data submitted by an account thief. It is considered that the account owner and the account thief are different natural persons.

US 2010/306821 A1 discloses evaluating a user request to regain control of an online account. The user request includes information that establishes the user's identity or that substantiates that the user is the owner of the online account. This information is compared to stored information associated with the online account. The stored information associated with the online account includes a stored history of recent activities or one or more locations of a registered user when the registered user previously accessed the online account.

Currently, in verifying account appeal data, generally multiple pieces of account appeal data for a same account are collected, and then allocated to the customer service system or a verifying system to verify. However, if collected multiple pieces of account appeal data for a same account are submitted by different natural persons, including for example not only account appeal data submitted by an account owner, but also account appeal data submitted by an account thief, a verification result may be inaccurate if a verification result may be inaccurate if a verification is performed based on the multiple pieces of account appeal data for the same account, and the account may be determined to be belongs to a wrong account owner.

Therefore, it is important to solve the problem of how to recognize correlated account appeal data from multiple pieces of account appeal data for a same account and determine account appeal data submitted by a same natural person, so as to help to determine ownership of the account.

### SUMMARY

The invention is defined by the appended claims. An account appeal processing method is provided according to an embodiment of the present disclosure, including:
obtaining first account appeal data for a first account submitted by a first user, each piece of account appeal data including at least one feature content;
comparing, if there is second account appeal data for the first account, the feature content of the first account appeal data with the feature content of the second account appeal data, to determine a correlation between the first account appeal data and the second account appeal data;
determining, if the correlation meets a preset correlation condition, that the first account appeal data is correlated with the second account appeal data;
combining the first account appeal data with the second account appeal data after it is determined that the first account appeal data is correlated with the second account appeal data, to obtain combined account appeal data;
determining, by using the combined account appeal data, whether the first account belongs to the first user; and
sending a password of the first account to the first user or receiving a password of the first account that is entered by the first user, if it is determined that the first account belongs to the first user, to allow the first user to operate the first account by using the password.

A server is further provided according to an embodiment of the present disclosure, including:
an account appeal data obtaining module, configured to obtain first account appeal data for a first account submitted by a first user, each piece of account appeal data including at least one feature content;
a correlation determining module, configured to compare, if there is second account appeal data for the first account, the feature content of the first account appeal data with the feature content of the
second account appeal data, to determine a correlation between the first account appeal data and the second account appeal data;
an association determining module, configured to determine, if the correlation meets a preset correlation condition, that the first account appeal data is correlated with the second account appeal data;
an account ownership determining module, configured to combine the first account appeal data and the second account appeal data after it is determined that the first account appeal data is correlated with the second account appeal data, to obtain combined account appeal data, and determine, by using the combined account appeal data, whether the first account belongs to the first user; and
a communications module, configured to: send a password of the first account to the first user or receive a password of the first account that is entered by the first user, if it is determined that the first account belongs to the first user, to allow the first user to operate the first account by using the password.

According to the account appeal processing method provided in embodiments of the present disclosure, the server may obtain the first account appeal data for the first account submitted by the first user, and compare the feature content between the first account appeal and the recorded second account appeal data for the first account, to determine a correlation between the first account appeal data and the second account appeal data. The correlation indicates a possibility that the first account appeal data is correlated with the second account appeal data. A preset correlation condition corresponding to a case that the multiple pieces of account appeal data for the same account are correlated with each other is preset. Therefore, if the correlation meets the preset correlation condition, it is determined that the first account appeal data is correlated with the second account appeal data, thereby determining account appeal data that belongs to a same natural person, so as to help to determine account ownership, and increase accuracy of a result of determining the account ownership.

### BRIEF DESCRIPTION OF THE DRAWINGS

To describe the technical solutions in the embodiments of the present disclosure or the existing technology more clearly, the following briefly introduces the accompanying drawings required for describing the embodiments or the existing technology. Apparently, the accompanying drawings in the following description show only some embodiments of the present disclosure, and a person of ordinary skill in the art may still derive other drawings from the provided accompanying drawings without creative efforts.
FIG. 1 is a structural block diagram of an account appeal processing system according to an embodiment of the present disclosure;
FIG. 2 is a signaling flowchart of an account appeal processing method according to an embodiment of the present disclosure;
FIG. 3 is a flowchart of an account appeal processing method according to an embodiment of the present disclosure;
FIG. 4 is a schematic diagram of some feature contents for filing an account appeal for a account;
FIG. 5 is another flowchart of an account appeal processing method according to an embodiment of the present disclosure;
FIG. 6 is still another flowchart of an account appeal processing method according to an embodiment of the present disclosure;
FIG. 7 is yet another flowchart of an account appeal processing method according to an embodiment of the present disclosure;
FIG. 8 is a flowchart of a Bayes classification model pretraining method according to an embodiment of the present disclosure;
FIG. 9 is a flowchart of determining a correlation between account appeal data for each account according to an embodiment of the present disclosure;
FIG. 10 is still yet another flowchart of an account appeal processing method according to an embodiment of the present disclosure;
FIG. 11 is a structural block diagram of a server according to an embodiment of the present disclosure;
FIG. 12 is a structural block diagram of a correlation determining module according to an embodiment of the present disclosure;
FIG. 13 is another structural block diagram of a server according to an embodiment of the present disclosure;
FIG. 14 is a structural block diagram of a correlation determining execution unit according to an embodiment of the present disclosure;
FIG. 15 is still another structural block diagram of a server according to an embodiment of the present disclosure;
FIG. 16 is another structural block diagram of a correlation determining execution unit according to an embodiment of the present disclosure;
FIG. 17 is still another structural block diagram of a server according to an embodiment of the present disclosure; and

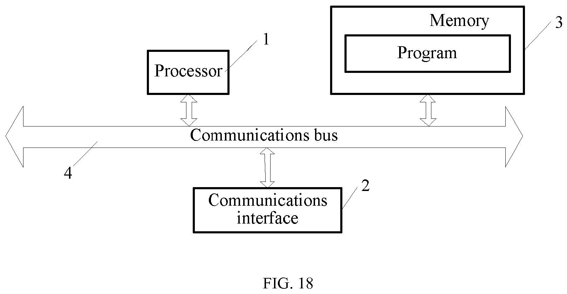

FIG. 18 is a structural block diagram of hardware of a server according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Obviously, the described embodiments are only some embodiments instead of all embodiments of the present disclosure. All other embodiments obtained by a person of ordinary skill in the art based on the embodiments of the present disclosure without creative efforts shall fall within the protection scope of the present disclosure.

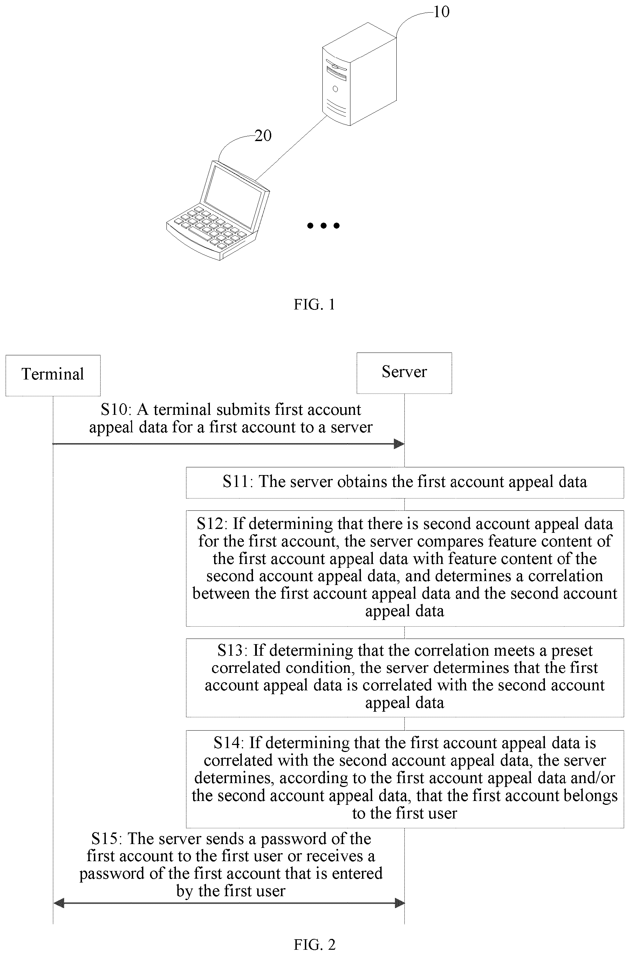

FIG. 1 is a structural block diagram of an account appeal processing system according to an embodiment of the present disclosure. The account appeal processing method provided in this embodiment of the present disclosure may be implemented based on the system shown in FIG. 1. Referring to FIG. 1, the account appeal processing system provided in this embodiment of the present disclosure may include a server 10 and at least one terminal 20.

The server 10 may be a device provided on a network side and used for processing account appeal data submitted by the terminal. The server 10 may be a single server, or may be a server cluster that includes multiple servers.

The terminal 20 is a device on a user side that is used for submitting account appeal data, such as a mobile phone, a tablet computer, or a notebook computer. The account appeal data submitted by the terminal 20 may be entered and submitted by an account owner, or may be entered and submitted by an account thief. In this embodiment of the present disclosure, the server processes account appeal data for a same account that is submitted by the terminal 20, to determine correlated account appeal data, and determine account appeal data submitted by a same natural person, so as to help to determine ownership of the account, and increase a possibility of determining that the account belongs to the account owner.

Based on the system shown in FIG. 1, FIG. 2 is a signaling flowchart of an account appeal processing method according to an embodiment of the present disclosure. With reference to FIG. 1 and FIG. 2, the flow may include the following steps S10 to S15.

Step S10: A first user submits first account appeal data for a first account to a server by using a terminal.

The first account is an account to be retrieved in this embodiment of the present disclosure.

A user of the terminal, that is, the first user, may be an owner of the first account, or may be an account thief. Account appeal data includes at least one feature content, and the feature content may be a piece of specific appeal information in the account appeal data.

Step S11: The server obtains the first account appeal data.

The first account appeal data may include at least one feature content.

Step S12: If it is determined that there is second account appeal data for the first account, the server compares the feature content of the first account appeal data with the feature content of the second account appeal data, and determines a correlation between the first account appeal data and the second account appeal data.

Optionally, the second account appeal data may be account appeal data for the first account that is previously recorded by the server and submitted by a second user. In this embodiment of the present disclosure, the second account appeal data may be generated based on account appeal information uploaded by an owner of the first account, or may be generated based on account appeal information uploaded by an account thief. Therefore, an objective of this embodiment of the present disclosure is to determine whether the first account appeal data and the second account appeal data for the first account are correlated with each other, that is, whether the first user and the second user are a same natural person, so as to help to determine ownership of the first account according to a determining result.

In this embodiment of the present disclosure, after the first account appeal data and the second account appeal data are obtained, the feature content of the first account appeal data and the feature content of the second account appeal data may be compared, to determine a comparison result of the feature content. In this embodiment of the present disclosure, based on the comparison result of the feature content of the first account appeal data and the second account appeal data, the correlation between the first account appeal data and the second account appeal data can be determined. The correlation may be used for indicating a possibility that the first account appeal data is correlated with the second account appeal data, that is, a possibility that the first user submitting the first account appeal data and the second user submitting the second account appeal data are a same natural person.

Step S13: If it is determined that the correlation meets a preset correlation condition, the server determines that the first account appeal data is correlated with the second account appeal data.

The preset correlation condition may indicate a target correlation between multiple pieces of account appeal data corresponding to the case that the multiple pieces of account appeal data for a same account are correlated with each other (for example, the multiple pieces of account appeal data for the same account belong to a same natural person). Therefore, in this embodiment of the present disclosure, if the correlation between the first account appeal data and the second account appeal data meets the preset correlation condition, it can be determined that the first account appeal data is correlated with the second account appeal data, thereby determining that the first user submitting the first account appeal data and the second user submitting the second account appeal data are the same natural person.

Step S14: If it is determined that the first account appeal data is correlated with the second account appeal data, the server determines, according to one or more of the first account appeal data and the second account appeal data, that the first account belongs to the first user.

Step S15: The server sends a password of the first account to the first user or receives a password of the first account that is entered by the first user, to allow the first user to operate the first account by using the password.

It can be seen that, in this embodiment of the present disclosure, the server may obtain the first account appeal data for the first account submitted by the first user, and compare the feature content between the first account appeal and the recorded second account appeal data for the first account, to determine the correlation between the first account appeal data and the second account appeal data. The correlation indicates a possibility that the first account appeal data is correlated with the second account appeal data. A preset correlation condition corresponding to a case that the multiple pieces of account appeal data for the same account are correlated with each other is preset. Therefore, if the correlation meets the preset correlation condition, it is determined that the first account appeal data is correlated with the second account appeal data, that is, the first user submitting the first account appeal data and the second user submitting the second account appeal data are a same natural person, so as to help to determine account ownership, and increase accuracy of a result of determining the account ownership.

The following describes the account appeal processing method from the perspective of the server. The account appeal processing method described in the following may be cross-referenced with the signaling flow content described in the foregoing.

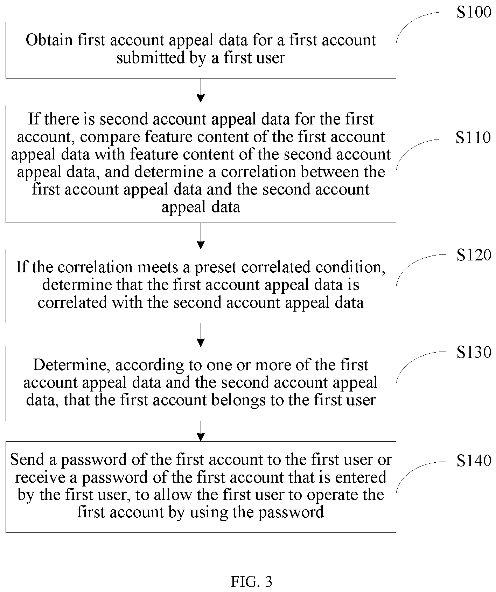

FIG. 3 is a flowchart of an account appeal processing method according to an embodiment of the present disclosure. The method may be applied to a server. Optionally, the server may be a server that is provided by an account authority to process an account appeal, and the server may collect account appeal data submitted by a user. Referring to FIG. 3, the account appeal processing method provided in this embodiment of the present disclosure may include the following steps S100 to S140.

In step S100, first account appeal data for a first account submitted by a first user is obtained.

The first account is an account to be retrieved in this embodiment of the present disclosure. The first account appeal data may be appeal data that is submitted by the first user to the server by using a terminal and that is used for retrieving the first account. The first user may be an owner of the first account, or may be an account thief.

Optionally, each piece of account appeal data may include at least one feature content, and the feature content may be a piece of specific appeal information in the account appeal data. Specifically, a feature content may correspond to a content that is required to be entered in an item for filing an account appeal.

While entering the account appeal data, the terminal may display at least one item that needs to be entered. Optionally, the item that needs to be entered includes contact information (such as a mobile phone and an e-mail), personal information (such as a name, an ID card, and an address), usage data (such as a used password, a security problem, and a bound mobile phone), or the like. Optionally, the feature content may further include a terminal identifier, a network IP, and the like that is automatically extracted by the terminal and carried in account appeal data.

It is noteworthy that, different account types may correspond to different items that need to be entered. For example, an item that needs to be entered for a social-type account may include: contact information, personal information, usage data, or a social relationship (such as friend information). For another example, an item that needs to be entered for a game-type account may include: contact information, personal information, usage data, a game character name, or the like. Therefore, when filing an account appeal, a specific item that needs to be entered is determined according to an actual account type and application scenario, which is not limited.

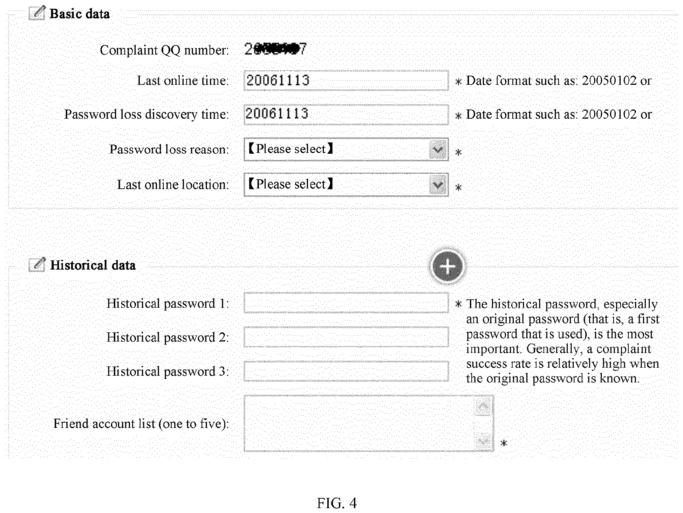

For convenience of understanding, FIG. 4 shows some feature contents for filling an account appeal for a social-type account.

In step S110, if there is second account appeal data for the first account, the feature content of the first account appeal data is compared with the feature content of the second account appeal data, to determine a correlation between the first account appeal data and the second account appeal data.

Optionally, the second account appeal data may be account appeal data for the first account that is previously recorded by the server. A time when the second account appeal data is submitted to the server may be earlier than a time when the first account appeal data is submitted to the server. The second account appeal data may be generated based on account appeal data that is submitted earlier than the first account appeal data.

Optionally, the second account appeal data may be generated based on account appeal data uploaded by an owner of the first account, or may be generated based on account appeal data uploaded by an account thief. Therefore, an objective of this embodiment of the present disclosure is to determine whether the first account appeal data and the second account appeal data for the first account are correlated with each other, so as to help to determine ownership of the first account according to a determining result.

After determining the first account appeal data and the second account appeal data for the first account, the server may determine, by processing specific content of the first account appeal data and the second account appeal data, a possibility that the first account appeal data is correlated with the second account appeal data (which is referred to as the correlation between the first account appeal data and the second account appeal data).

Specifically, in this embodiment of the present disclosure, the feature content of the first account appeal data may be compared with the feature content of the second account appeal data, to determine a comparison result of the feature content. In a case that both the first account appeal data and the second account appeal data have feature content of contact information and feature content of personal information in this embodiment of the present disclosure, the feature content of the contact information and the feature content of the personal information of the first account appeal data may be respectively compared with those of the second account appeal data, thereby obtaining a comparison result for each feature content.

The correlation between the first account appeal data and the second account appeal data may be determined based on the comparison result for each feature content of the first account appeal data and the second account appeal data.

Optionally, for example, the correlation may be a probability that the first account appeal data is correlated with the second account appeal data.

In step S120, if the correlation meets a preset correlation condition, it is determined that the first account appeal data is correlated with the second account appeal data.

Optionally, in this embodiment of the present disclosure, a preset correlation condition corresponding to a case that the multiple pieces of account appeal data for the same account are correlated with each other may be preset (for example, the preset correlation condition is a target correlation between account appeal data corresponding to the case that the multiple pieces of account appeal data for the same account are correlated with each other, where the target correlation may indicate a corresponding target possibility that the multiple pieces of account appeal data for the same account are correlated with each other), so that if the correlation meets the preset correlation condition, it is determined that the possibility that the first account appeal data is correlated with the second account appeal data is not less than the target possibility, thereby determining that the first account appeal data is correlated with the second account appeal data.

Specifically, in this embodiment of the present disclosure, a target probability corresponding to the case that multiple pieces of account appeal data for a same account are correlated with each other may be set, so that when a probability that the first account appeal data is correlated with the second account appeal data is determined and the probability is not less than the target probability, it is determined that the first account appeal data is correlated with the second account appeal data.

In step S 130, it is determined, according to one or more of the first account appeal data and the second account appeal data, that the first account belongs to the first user.

In step S140, a password of the first account is sent to the first user or a password of the first account that is entered by the first user is received, to allow the first user to operate the first account by using the password.

It can be seen that, an account appeal processing method provided in embodiments of the present disclosure includes: obtaining, by a server, first account appeal data for a first account submitted by a first user, each piece of account appeal data including at least one feature content; comparing, if there is second account appeal data for the first account, the feature content of the first account appeal data with the feature content of the second account appeal data, to determine a correlation between the first account appeal data and the second account appeal data; determining, if the correlation meets a preset correlation condition, that the first account appeal data is correlated with the second account appeal data; determining, according to one or more of the first account appeal data and the second account appeal data, that the first account belongs to the first user; and sending a password of the first account to the first user or receiving a password of the first account that is entered by the first user, to allow the first user to operate the first account by using the password.

In this embodiment of the present disclosure, the server may obtain the first account appeal data for the first account submitted by the first user, and compare the feature content between the first account appeal and the recorded second account appeal data for the first account, to determine a correlation between the first account appeal data and the second account appeal data. The correlation indicates a possibility that the first account appeal data is correlated with the second account appeal data. A preset correlation condition corresponding to a case that the multiple pieces of account appeal data for the same account are correlated with each other is preset. Therefore, if the correlation meets the preset correlation condition, it is determined that the first account appeal data is correlated with the second account appeal data, thereby determining account appeal data that belongs to a same natural person, so as to help to determine account ownership, and increase accuracy of a result of determining the account ownership.

Optionally, after it is determined that the first account appeal data is correlated with the second account appeal data, the first account appeal data and the second account appeal data may be combined, so that when ownership of the first account is verified, a probability of determining that the first account belongs to an account owner thereof may be increased by using the combined first account appeal data and second account appeal data, thereby increasing accuracy of determining the ownership of the first account.

Optionally, if the correlation between the first account appeal data and the second account appeal data does not meet the preset correlation condition, it may be considered that the first account appeal data is uncorrelated with the second account appeal data, and when verifying subsequent account appeal data, the first account appeal data and the second account appeal data may be separately used in the verifying.

Optionally, in this embodiment of the present disclosure, when comparing each feature content between the first account appeal data and the second account appeal data, the feature contents are compared to determine a difference level of each feature content, and a difference degree between the first account appeal data and the second account appeal data is comprehensively analyzed based on the difference level of each feature content, to determine the correlation between the first account appeal data and the second account appeal data.

Optionally, for example, the difference level includes: a level that a feature content is the same, a level that a feature content is similar, a level that the feature content is not similar, and a level that the feature content is completely different, or the like. Preferably, in this embodiment of the present disclosure, the level that a feature content is the same and the level that a feature content is similar are used as two preferred difference levels. Obviously, based on different account appeal cases, used difference levels is not limited to the level that a feature content is the same and the level that a feature content is similar.

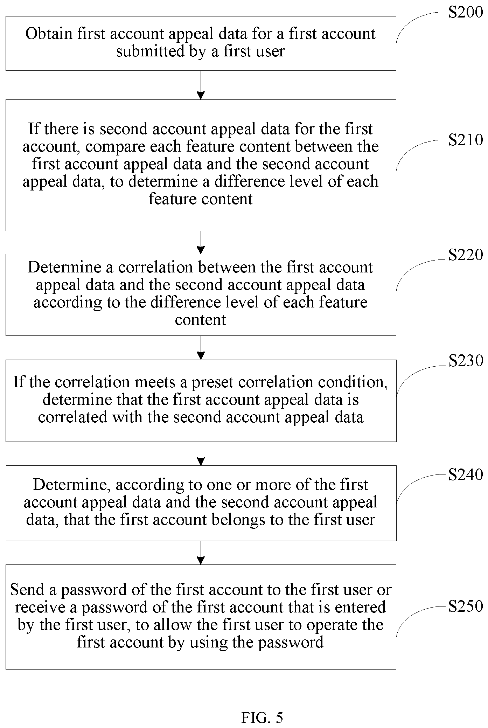

FIG. 5 is another flowchart of an account appeal processing method according to an embodiment of the present disclosure. Referring to FIG. 5, the method may include the following steps S200 to S250.

In step S200, first account appeal data for a first account submitted by a first user is obtained.

In step S210, if there is second account appeal data for the first account, the feature contents of the first account appeal data are compared with the feature contents of the second account appeal data respectively, to determine a difference level of each feature content.

In step S220, a correlation between the first account appeal data and the second account appeal data is determined according to the difference level of each feature content.

Optionally, the correlation may indicate a possibility that the first account appeal data is correlated with the second account appeal data.

Step S230: if the correlation meets a preset correlation condition, it is determined that the first account appeal data is correlated with the second account appeal data.

Optionally, the determined difference level of each feature content may include: a level that a feature content is the same and a level that a feature content is similar. If a feature content is the same, it may be considered that, the feature content is completely the same between the first account appeal data and the second account appeal data. If a feature content is similar, it may be considered that, the feature content is partially the same between the first account appeal data and the second account appeal data, and a range of the same part is not less than a specified range.

Optionally, the range of the same part is not less than the specified range means that, for example, a ratio of a quantity of characters in the same part to a total quantity of characters in the feature content is not less than a specified ratio, or a quantity of characters in the same part is not less than a specified quantity, or the like. Obviously, a specific requirement for the range of the same part being not less than the specified range may be determined according to an actual case, and is not limited to the description in this paragraph.

An item of social relationship that required to be entered in account appeal data for a social-type account is taken as an example. If the feature content of the required item of social relationship in first account appeal data is a1, a2, a3, a4, a5, and a6 (referring to information such as a friend nickname), and feature content of the required item of social relationship in second account appeal data is also a1, a2, a3, a4, a5, and a6, because the feature content of the social relationship is completely the same between the first account appeal data and the second account appeal data, it is considered that a difference level of feature content of the required item of social relationship between the first account appeal data and the second account appeal data is the level that the feature content is the same.

If the feature content of the required item of social relationship in the first account appeal data is a1, a2, a3, a4, a5, and a6, and the feature content of the required item of social relationship in the second account appeal data is a1, a2, a3, a4, and a7, in the feature content of the required item of social relationship in the first account appeal data and the second account appeal data, four pieces of friend information are the same, and the ratio is not less than the specified ratio or the quantity is not less than the specified quantity (a specific value may be determined according to an actual case). Then, it may be considered that the difference level of the feature content of the required item of social relationship between the first account appeal data and the second account appeal data is the level that the feature content is similar.

Obviously, a principle of determining a difference level of feature content of other items between the first account appeal data and the second account appeal data is similar to the foregoing description, and cross-reference may be made.

In step S240, it is determined, according to one or more of the first account appeal data and the second account appeal data, that the first account belongs to the first user.

In step S250, a password of the first account is sent to the first user or a password of the first account that is entered by the first user is received, to allow the first user to operate the first account by using the password.

Optionally, in this embodiment of the present disclosure, by using the determined difference level of each feature content between the first account appeal data and the second account appeal data, it can be determined whether there is a strong correlation or a weak correlation between the first account appeal data and the second account appeal data. The strong correlation may indicate that the determined correlation between the first account appeal data and the second account appeal data meets a first correlation, and the weak correlation may indicate that the determined correlation between the first account appeal data and the second account appeal data meets a second correlation. The first correlation is higher than the second correlation. Therefore, when it is determined that there is a strong correlation between the first account appeal data and the second account appeal data, it is determined that the correlation between the first account appeal data and the second account appeal data meets the preset correlation condition, and the first account appeal data and the second account appeal data are correlated with each other, that is, belong to a same natural person.

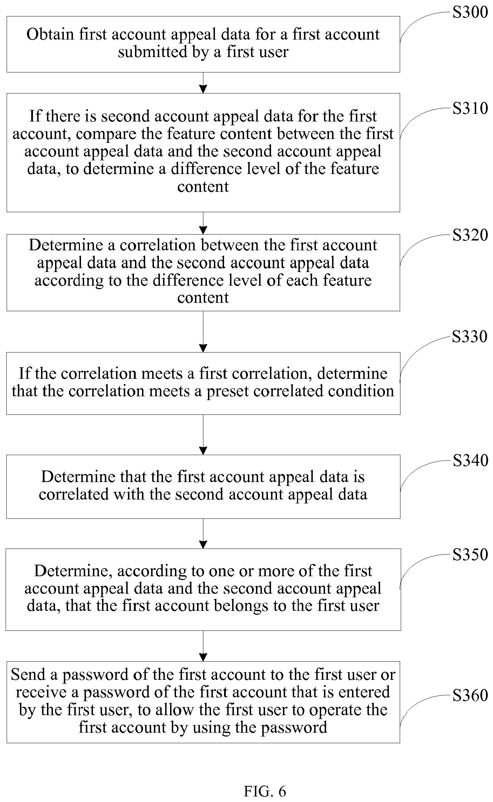

Optionally, with the example that the difference level includes a level that a feature content is the same and a level that a feature content being similar, FIG. 6 shows still another flowchart of an account appeal processing method according to an embodiment of the present disclosure. Referring to FIG. 6, the method may include the following steps S300 to S360.

In step S300, first account appeal data for a first account submitted by a first user is obtained.

In, step S310: if there is second account appeal data for the first account, the feature content of the first account appeal data is compared with the feature content of the second account appeal data, to determine a difference level of the feature content, where the difference level includes: a level that a feature content is the same and a level that a feature content is similar.

In step S320, a correlation between the first account appeal data and the second account appeal data is determined according to the difference level of each feature content.

In step S330, if the correlation meets a first correlation, it is determined that the correlation meets a preset correlation condition, where that the correlation meets a first correlation includes: each feature content is the same; or a part of the feature contents is the same and the other part of the feature contents is similar, a type of each feature content which is the same meets a preset first type, and a type of each feature content which is similar meets a preset second type.

That a part of the feature contents is the same and the other part of the feature contents is similar indicates that feature content in the first account appeal data and the second account appeal data is divided into two parts: a same part and a similar part. That a type of each feature content which is the same meets a preset first type may be considered as that, the type of the same feature content should include at least the preset first type, that is, the type of feature content of the same feature content should include at least the preset first type, and may also include another type.

That a type of feature content which is similar meets a preset second type may be considered as that, the type of the feature content which is similar only falls within a range of the preset second type, and should not exceed the range.

Optionally, the preset first type may be at least one feature content type selected from multiple feature content types that need to be entered. Taking a social-type account as an example, the preset first type may be contact information, a terminal identifier, an IP, personal information, or the like. The preset second type may be at least one feature content type selected from multiple feature content types that need to be entered, for example, usage data and a social relationship.

The items in the preset first type and the preset second type may be different, or partially the same.

Taking a social-type account as an example, that the correlation between the first account appeal data and the second account appeal data meets the first correlation may be the case that:
the contact information is the same;
the IP is the same (an IP for submitting account appeal data is the same);
the terminal identifier is the same (an identifier of a terminal for submitting account appeal data is the same);
the personal information is the same;
the usage data is similar (for example, for the first time, six passwords are entered, and for the second time, five passwords are entered, so that four passwords are the same between the two times); and
the social relationship is similar (for the first time, six friends are invited, and for the second time, five friends are invited, so that four friends are the same between the two times).

Alternatively, that the correlation between the first account appeal data and the second account appeal data meets the first correlation may be the case that:
the contact information is the same;
the IP is the same;
the terminal identifier is the same;
the personal information is the same;
the usage data is the same; and
the social relationship is the same.

It is noteworthy that, that the correlation between the first account appeal data and the second account appeal data meets the first correlation may be a policy that is set in this embodiment of the present disclosure to forcibly determine that the first account appeal data is correlated with the second account appeal data. The first correlation may be determined according to an actual account type and application scenario.

In step S340, it is determined that the first account appeal data is correlated with the second account appeal data.

In step S350, it is determined, according to one or more of the first account appeal data and the second account appeal data, that the first account belongs to the first user.

In step S360, a password of the first account is sent to the first user or a password of the first account that is entered by the first user is received, to allow the first user to operate the first account by using the password.

Optionally, in this embodiment of the present disclosure, in addition to setting the first correlation content for forcibly determining that the first account appeal data is correlated with the second account appeal data, an algorithm model that can determine the probability that the first account appeal data is correlated with the second account appeal data is trained, and the correlation between the first account appeal data and the second account appeal data is indicated by the determined probability, thereby determining whether the first account appeal data is correlated with the second account appeal data.

Optionally, a Bayes classification model may be selected as the algorithm model. The Bayes classification model is generated based on a Bayes classification algorithm, which is a classification model in statistics, and can perform classification by using probability statistic knowledge. In many occasions, the Bayes classification algorithm is comparable to a decision tree algorithm and a neural network classification algorithm. The algorithm can be applied to a large database. In addition, the algorithm has a simple method, high classification accuracy, and a high speed. Therefore, in this embodiment of the present disclosure, the Bayes classification model may be pretrained, and the probability that the first account appeal data is correlated with the second account appeal data is calculated by using the Bayes classification model, thereby determining the correlation between the first account appeal data and the second account appeal data.

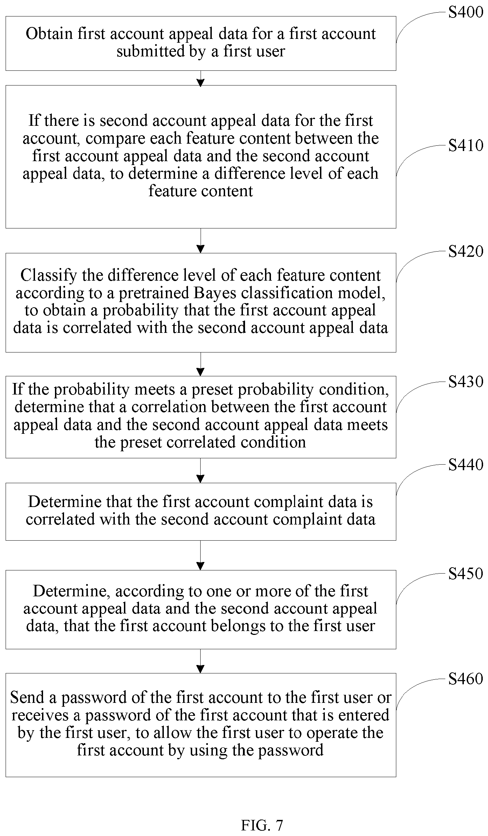

Correspondingly, FIG. 7 is yet another flowchart of an account appeal processing method according to an embodiment of the present disclosure. According to the method shown in FIG. 7, an account appeal is processed mainly by using the Bayes classification model. It may be implemented independently from the method for processing an account appeal by using the first correlation according to the method shown in FIG. 6. Referring to FIG. 7, the method may include the following steps S400 to S460.

In step S400, first account appeal data for a first account submitted by a first user is obtained.

In step S410, if there is second account appeal data for the first account, the feature contents of the first account appeal data are compared with the feature contents of the second account appeal data respectively, to determine a difference level of each feature content.

In step S420, the difference level of each feature content is classified using a pretrained Bayes classification model, to obtain a probability that the first account appeal data is correlated with the second account appeal data.

The probability may indicate a correlation between the first account appeal data and the second account appeal data.

The difference level herein includes at least: a level that a feature content is the same and a level that a feature content is similar.

In step S430, if the probability meets a preset probability condition, it is determined that a correlation between the first account appeal data and the second account appeal data meets the preset correlation condition.

In step S440, it is determined that the first account appeal data is correlated with the second account appeal data.

In step S450, it is determined, according to one or more of the first account appeal data and the second account appeal data, that the first account belongs to the first user.

In step S460, a password of the first account is sent to the first user or a password of the first account that is entered by the first user is received, to allow the first user to operate the first account by using the password.

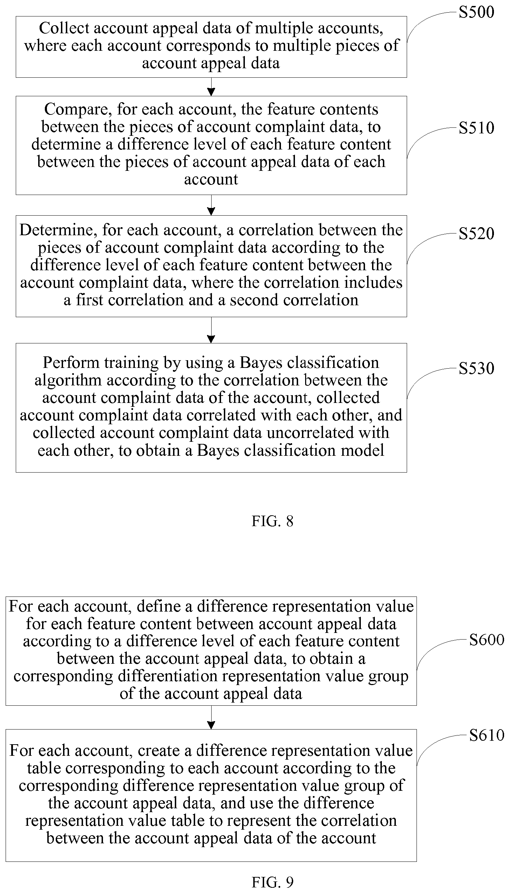

Optionally, FIG. 8 shows a process of pretraining a Bayes classification model. Referring to FIG. 8, the process may include the following steps S500 to S530.

In step S500, account appeal data of multiple accounts is collected, where each account corresponds to multiple pieces of account appeal data.

In this embodiment of the present disclosure, account appeal data of a massive quantity of accounts may be collected, to perform subsequent training of the Bayes classification model. There may be multiple pieces of collected account appeal data for one account, and the multiple pieces of account appeal data for one account may include some pieces submitted by an account owner, and may include some pieces submitted by an account thief.

In step S510: the feature content is compared between the pieces of account appeal data for each account, to determine a difference level of the feature content between the pieces of account appeal data of the account.

In this embodiment of the present disclosure, multiple pieces of account appeal data for a same account is used as a unit, to process the account appeal data of each account, and determine the difference level of each feature content between the pieces of account appeal data of each account. Specifically, in this embodiment of the present disclosure, for each account, each feature content is compared between the pieces of account appeal data, to identify the difference level of each feature content between the pieces of account appeal data. For a specific process of determining the difference level of the feature content between the account appeal data, one may refer to the description in the corresponding part in the foregoing.

Optionally, in this embodiment of the present disclosure, for multiple pieces of account appeal data for a same account, pairwise comparison may be performed on each feature content of the account appeal data, and the feature content of combined account appeal data after the pairwise comparison may be further compared with the feature content of another piece of account appeal data for the same account.

In step S520, a correlation between the pieces of account appeal data is determined for each account according to the difference level of each feature content between the account appeal data of the account, where the correlation includes a first correlation and a second correlation.

As described in the foregoing that, the first correlation indicates that there is a strong correlation between account appeal data for a same account, and the second correlation indicates that there is a weak correlation between the account appeal data for the same account.

Optionally, in the example in which the difference level includes a level that a feature content is the same and a level that a feature content is similar, the first correlation may indicate that each feature content is the same; or a part of the feature contents is the same and the other part of the feature contents is similar, a type of each feature content which is the same meets a preset first type, and a type of each feature content which is similar meets a preset second type.

Optionally, the second correlation may indicate that each feature content in multiple pieces of account appeal data for a same account is similar. Taking a social-type account as an example, that a correlation between account appeal data of the account is the second correlation may be the case that:
the contact information is similar (for example, abcd@qq.com and abcd2016@qq.com);
the IP is similar (for example, 1.2.3.4 and 1.2.3.5);
the personal information is similar (for example, a name submitted for the first time is Jie Liu, and a name submitted for the second time is Jie);
the usage data has low similarity (that usage data is similar may be the case that, for example, a quantity of same characters in a password reaches a first value, for example, there are four same characters; that usage data has low similarity may be that, for example, a quantity of same characters in a password is less than the first value and greater than a second value, where the first value is greater than the second value, for example, there are two same characters in the password); and
the social relationship is similar.

In step S530, training is performed by using a Bayes classification algorithm according to the correlation between the account appeal data for each account, collected account appeal data correlated with each other, and collected account appeal data uncorrelated with each other, to obtain the Bayes classification model.

In this embodiment of the present disclosure, after collected account appeal data of a massive quantity of accounts is processed, to determine the correlation between the account appeal data of all the accounts, training may be performed based on extracted positive and negative sample data by using the Bayes classification algorithm.

The positive sample data may be considered as the collected and extracted account appeal data that is correlated, and the negative sample data may be considered as the collected and extracted account appeal data that is uncorrelated. The positive and negative sample data may be mainly obtained by means of manual selection and user complaint data.

Optionally, in this embodiment of the present disclosure, a correlation between correlated account appeal data and a correlation between uncorrelated account appeal data may be analyzed by using the collected correlated account appeal data and uncorrelated account appeal data, to train a model of correlation between the account appeal data for each account by using the analyzed correlation between correlated account appeal data and correlation between uncorrelated account appeal data as a classification reference and by using the Bayes classification algorithm, to obtain an algorithm formula that can calculate a probability that multiple pieces of account appeal data for a same account are correlated with each other, so as to achieve the training of the Bayes classification model.

Optionally, in this embodiment of the present disclosure, for convenience of training of the Bayes classification model, a difference level of each feature content between the pieces of account appeal data may be numerically represented. Specifically, a process, in the method shown in FIG. 8, of determining the correlation between the account appeal data of all the accounts may be implemented as shown in FIG. 9, which includes the following steps S600 to S610.

In step S600, for each account, a difference representation value of each feature content between the pieces of account appeal data is defined according to a difference level of each feature content of the account appeal data, to obtain a corresponding difference representation value group between the pieces of account appeal data.

Optionally, the difference representation value group may be obtained by grouping difference representation values defined based on a difference level of each feature content of pairwise account appeal data. The difference representation value includes a first value that indicates that feature content is the same and a second value that indicates that feature content is similar, and the first value is different from the second value. Optionally, the first value may be 1, and the second value may be 0. Obviously, specific numerical values of the first value and the second value may be determined according to an actual case, and a form in which the first value is 1 and the second value is 0 is only optional.

In this embodiment of the present disclosure, after each feature content is compared between the multiple pieces of account appeal data for the same account, the difference level of each feature content may be represented by using 1 and 0. If the comparison shows that a feature content is the same, a difference representation value for the feature content may be defined as 1. If the comparison shows that a feature content is similar, a difference representation value for the feature content may be defined as 0.

After the difference representation value of each feature content is defined as in this embodiment of the present disclosure, for example, a difference representation value group corresponding to the account appeal data of the account may be obtained as 11100 with respect to the following comparison result:
the IP is the same (the difference representation value is defined as 1);
the terminal identifier is the same (the difference representation value is defined as 1);
the personal information is the same (the difference representation value is defined as 1);
the usage data is similar (the difference representation value is defined as 0); and
the social relationship is similar (the difference representation value is defined as 0).

In step S610, for each account, a difference representation value table corresponding to the account is created according to the corresponding difference representation value group between the account appeal data, and the difference representation value table is used to represent the correlation between the account appeal data of the account.

Optionally, a difference representation value table of an account may have at least one difference representation value group, and one difference representation value group indicates a group of difference representation values of the feature contents between two pieces of account appeal data of the account.

Optionally, a form of a difference representation value table of an account is as follows, where 1 0 0 0 0 is a difference representation value group, and 1 1 0 1 0 is another difference representation value group:
10000
11010

It can be seen that, a difference representation value table of an account is actually in a form of a matrix.

In this embodiment of the present disclosure, after a difference representation value table corresponding to each account is obtained, a matrix group including multiple matrices may be obtained, to train a model of the correlation between the account appeal data of all the accounts by using the analyzed correlation between correlated account appeal data and correlation between uncorrclatcd account appeal data as a classification reference and by using the Bayes classification algorithm, to obtain an algorithm formula that can calculate a probability that multiple pieces of account appeal data for a same account are correlated with each other, so as to achieve the training of the Bayes classification model.

Therefore, in this embodiment of the present disclosure, in training the Bayes classification model, the training may be performed by using the Bayes classification algorithm according to the difference representation value table corresponding to each account, collected account appeal data correlated with each other, and collected account appeal data uncorrelated with each other, to obtain the Bayes classification model.

Optionally, specific content of the first correlation is mainly obtained according to actual account appeal experience, which may be determined according to experience of an account appeal processing expert in actual account appeal work, and used to forcibly determine that the first account appeal data is correlated with the second account appeal data. Therefore, a manner of determining, according to the first correlation, that the first account appeal data is correlated with the second account appeal data may have, when submitted account appeal data is relatively normative, relatively high accuracy of determining account appeal data ownership. However, when submitted account appeal data is relatively not normative, accuracy of determining account appeal data ownership by using the first correlation is not ideal.

However, the Bayes classification model is created based on the account appeal data of the massive quantity of accounts, which can relatively flexibly process account appeal data in various cases, and can deal with the cases of determining account appeal data ownership when submitted account appeal data is relatively normative or relatively not normative. Therefore, the Bayes classification model may be used to flexibly determine account appeal data ownership, and accuracy of a determination result is relatively high.

Based on this, in this embodiment of the present disclosure, account appeal data ownership may be independently determined based on the first correlation or the Bayes classification model; or account appeal data ownership may be determined by using both the first correlation and the Bayes classification model. For example, first whether the first account appeal data is correlated with the second account appeal data is determined based on the first correlation. If it is determined that the first account appeal data is uncorrelated with the second account appeal data, whether the first account appeal data is correlated with the second account appeal data is determined based on the Bayes classification model. Therefore, account appeal data is considered comprehensively, increasing accuracy of determining account appeal data ownership.

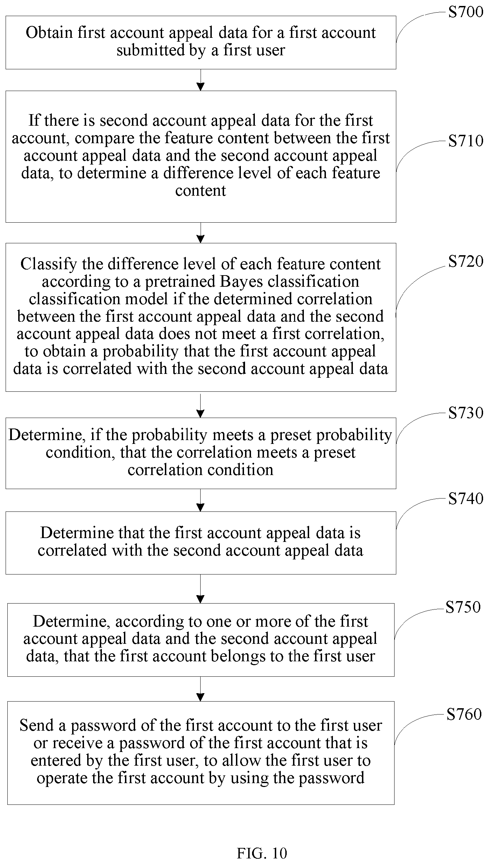

Correspondingly, FIG. 10 is still yet another flowchart of an account appeal processing method according to an embodiment of the present disclosure. Referring to FIG. 10, the method may include the following steps S700 to S760.

In step S700, first account appeal data for a first account submitted by a first user is obtained.

In step S710, if there is second account appeal data for the first account, the feature contents of the first account appeal data are compared with the feature contents of the second account appeal data respectively, to determine a difference level of each feature content, where the difference level includes: a level that a feature content is the same and a level that a feature content is similar.

In step S720, the difference level of each feature content is classified using a pretrained Bayes classification model if the determined correlation between the first account appeal data and the second account appeal data does not meet a first correlation, to obtain a probability that the first account appeal data is correlated with the second account appeal data. The probability is used to represent the correlation between the first account appeal data and the second account appeal data.

That the correlation does not meet a first correlation includes the case that: each feature content is different, or feature content of a preset first type is different, or feature content of a preset second type is not similar.

Optionally, that each feature content is different may be the case that: the contact information is different, the IP is different, the terminal identifier is different, the personal information is different, the usage data is different, and the social relationship is different.

That feature content of a preset first type is different may be the case that: the contact information is different, or the IP is different, or the terminal identifier is different, or the personal information is different. Difference levels of the usage data and the social relationship may be, or may be not considered.

That feature content of a preset second type is not similar may be the case that: the usage data is not similar, or the social relationship is not similar. Difference levels of the contact information, the IP, the terminal identifier, and the personal information may be or may be not considered.

In step S730, it is determined, if the probability meets a preset probability condition, that the correlation meets a preset correlation condition.

Optionally, the preset probability condition may be implemented by setting a target probability. If the probability is not lower than the target probability, it may be considered that the probability meets the preset probability condition.

In step S740, it is determined that the first account appeal data is correlated with the second account appeal data.

If the probability does not meet the preset probability condition, it may be considered that the first account appeal data is uncorrelated with the second account appeal data.

In step S750, it is determined, according to one or more of the first account appeal data and the second account appeal data, that the first account belongs to the first user.

Optionally, the first account appeal data and the second account appeal data may be combined after it is determined that the first account appeal data is correlated with the second account appeal data, to obtain combined account appeal data, so as to determine an account owner of the first account by using the combined account appeal data.

Optionally, a manner of combining the first account appeal data and the second account appeal data may be that, for each feature content, the part of the feature content which is the same are merged into one part, and the part of the feature content which is different are reserved and combined with the merged same feature content. For example, for feature content of usage data, a usage password in the first account appeal data is 123456, having a total of six characters, and a usage password in the second account appeal data is 72345, having a total of five characters. Therefore, four characters thereof are the same. The same 2345 may be merged into one part, and the different characters 1, 6, and 7 may be reserved and combined with the merged one part 2345, to obtain 1/7-2345-6.

Optionally, the second account appeal data may be previously submitted account appeal data for the first account, or the second account appeal data may be account appeal data generated by combining multiple pieces of previously submitted account appeal data for the first account which are correlated with each other based on the account appeal processing method provided in this embodiment of the present disclosure. For example, if the server previously obtained two pieces of account appeal data A and B for the first account, and it is determined that A is correlated with B, A and B may be combined into second account appeal data C. After obtaining first account appeal data D, the server may further determine whether C is correlated with D.

Optionally, in this embodiment of the present disclosure, for multiple pieces of account appeal data for a same account, whether the account appeal data is correlated with each other may be pairwise determined. If it is pairwise determined that the account appeal data is correlated with each other, the account appeal data may be combined. Whether the combined account appeal data is correlated with another piece of account appeal data for the same account may be further determined.

Optionally, when obtaining the first account appeal data, if the server has verified that a requester submitting the second account appeal data is an owner of the first account, the server may directly determine that a requester submitting the first account appeal data is the owner of the first account after determining that the first account appeal data is correlated with the second account appeal data.

For example, one year ago, a user filed an account appeal and submitted a piece of account appeal data A, and the account appeal data A was verified successfully. But after one year, the user forgets an account password, files an account appeal again, and submits another piece of account appeal data B. If it is determined, by using the account appeal processing method provided in this embodiment of the present disclosure, that the account appeal data A is correlated with the account appeal data B, it may be considered that the requester submitting the account appeal data B is the account owner, and may have a permission to change the account password, avoiding a subsequent verification process by a system or a customer service, and thus effectively and accurately implementing determining of account ownership.

It can be seen that, in this embodiment of the present disclosure, after it is determined that the first account appeal data is correlated with the second account appeal data, if it was previously determined, based on the second account appeal data, that the requester submitting the second account appeal data is the owner of the first account, it is determined that the requester submitting the first account appeal data is also the owner of the first account.

Optionally, if the owner of the first account is not determined based on the second account appeal data, after it is determined that the first account appeal data is correlated with the second account appeal data, the first account appeal data may be combine with the second account appeal data, to obtain combined account appeal data, so as to determine the account owner of the first account by using the combined account appeal data.

In step S760, a password of the first account is sent to the first user or a password of the first account that is entered by the first user is received, to allow the first user to operate the first account by using the password.

According to the account appeal processing method provided in this embodiment of the present disclosure, account appeal data correlated with each other may be determined, account appeal data belonging to a same natural person may be determined from multiple pieces of account appeal data for a same account, so as to help to determine account ownership, and increase accuracy of a result of determining the account ownership.

The following describes a server provided in an embodiment of the present disclosure. The server described in the following may be cross-referenced with the account appeal processing method described in the foregoing from the perspective of the server.

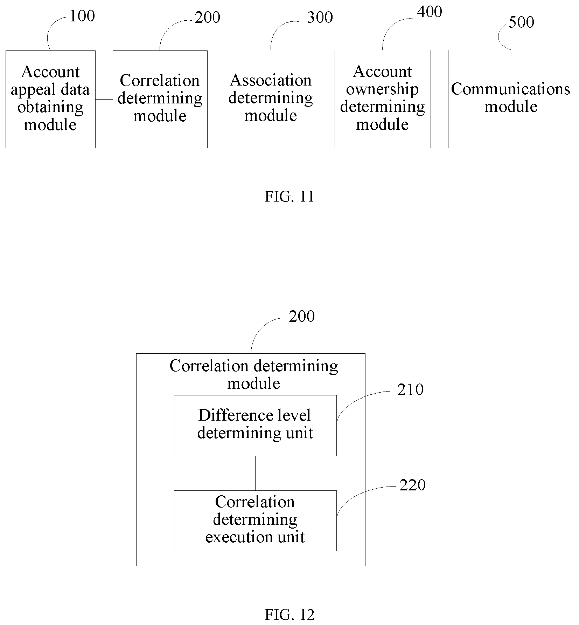

FIG. 11 is a structural block diagram of a server according to an embodiment of the present disclosure. Referring to FIG. 11, the server may include:
an account appeal data obtaining module 100, configured to obtain first account appeal data for a first account submitted by a first user, each piece of account appeal data including at least one feature content;
a correlation determining module 200, configured to separately compare, if there is second account appeal data for the first account, the feature content of the first account appeal data with the feature content of the second account appeal data, to determine a correlation between the first account appeal data and the second account appeal data;
an association determining module 300, configured to determine, if the correlation meets a preset correlation condition, that the first account appeal data is correlated with the second account appeal data;
an account ownership determining module 400, configured to determine, according to one or more of the first account appeal data and the second account appeal data, that the first account belongs to the first user; and
a communications module 500, configured to: send a password of the first account to the first user or receive a password of the first account that is entered by the first user, to allow the first user to operate the first account by using the password.

Optionally, the correlation between the first account appeal data and the second account appeal data may indicate a possibility that the first account appeal data is correlated with the second account appeal data.

That the correlation meets a preset correlation condition may include: the possibility is not lower than a corresponding possibility that multiple pieces of account appeal data for a same account are correlated with each other.

Optionally, FIG. 12 shows an optional structure of a correlation determining module 200 according to an embodiment of the present disclosure. Referring to FIG. 12, the correlation determining module 200 may include:
a difference level determining unit 210, configured to compare the feature contents of the first account appeal data with the feature contents of the second account appeal data respectively, to determine a difference level of each of the feature content; and
a correlation determining execution unit 220, configured to determine a correlation between the first account appeal data and the second account appeal data according to the difference level of each feature content, where the correlation indicates a possibility that the first account appeal data is correlated with the second account appeal data.

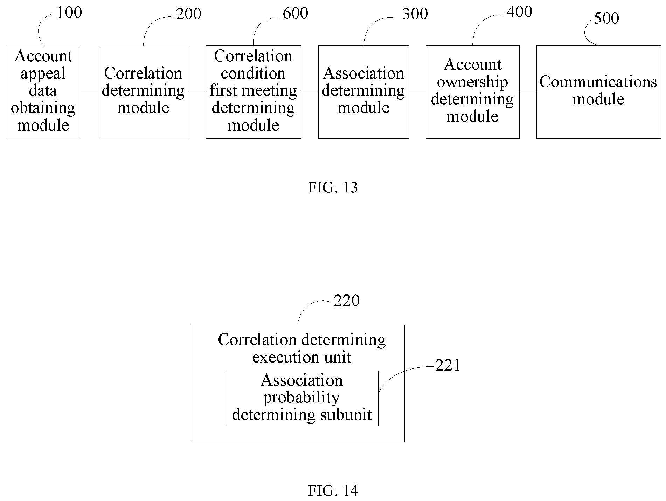

Optionally, the difference level may include: a level that a feature content is the same and a level that a feature content is similar. Based on FIG. 12, correspondingly, FIG. 13 shows another structural block diagram of a server according to an embodiment of the present disclosure. With reference to FIG. 11 and FIG. 13, the server may further include:
a correlation condition first meeting determining module 600, configured to determine, if the determined correlation between the first account appeal data and the second account appeal data meets a first correlation, that the correlation meets a preset correlation condition.

That the correlation meets a first correlation includes: each feature content is the same; or a part of the feature contents is the same and the other part of the feature contents is similar, a type of each feature content which is the same meets a preset first type, and a type of each feature content which is similar meets a preset second type.

Optionally, FIG. 14 shows an optional structure of a correlation determining execution unit 220 according to an embodiment of the present disclosure. Referring to FIG. 14, the correlation determining execution unit 220 may include:
an association probability determining subunit 221, configured to: classify a difference level of each feature content using a pretrained Bayes classification model, to obtain a probability that the first account appeal data is correlated with the second account appeal data, and use the probability to represent the correlation.

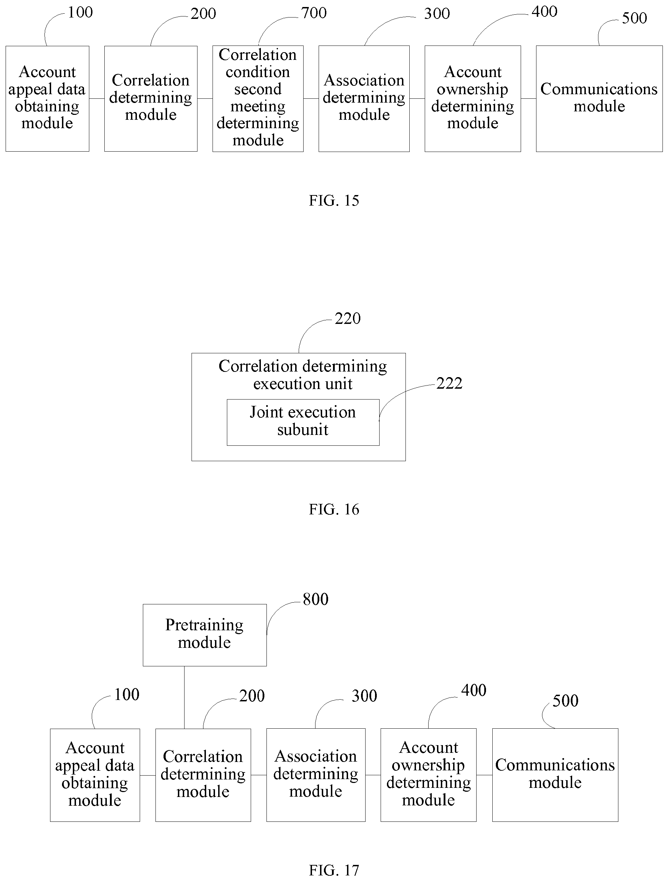

Correspondingly, based on FIG. 14, FIG. 15 shows still another structural block diagram of a server according to an embodiment of the present disclosure. With reference to FIG. 11 and FIG. 15, the server may further include:
a correlation condition second meeting determining module 700, configured to determine, if the probability meets a preset probability condition, that the correlation meets a preset correlation condition.

Optionally, the difference level includes: a level that a feature content is the same and a level that a feature content is similar. Correspondingly, FIG. 16 shows another optional structure of a correlation determining execution unit 220 according to an embodiment of the present disclosure. Referring to FIG. 16, the correlation determining execution unit 220 may include:
a joint execution subunit 222, configured to: classify a difference level of each feature content using a pretrained Bayes classification model if a determined correlation between the first account appeal data and the second account appeal data does not meet a first correlation, to obtain a probability that the first account appeal data is correlated with the second account appeal data, and use the probability to represent the correlation.

That the correlation does not meet a first correlation includes: each feature content is different, or each feature content of a preset first type is different, or each feature content of a preset second type is not similar.

Correspondingly, based on FIG. 16, in this embodiment of the present disclosure, if the probability meets a preset probability condition, it may be determined that the correlation meets a preset correlation condition.

Optionally, FIG. 17 is still another structural block diagram of a server according to an embodiment of the present disclosure. FIG. 17 shows a process of pretraining a Bayes classification model. With reference to FIG. 11 and FIG. 17, the server may further include:
a pretraining module 800, configured to: collect account appeal data of multiple accounts, where each account corresponds to multiple pieces of account appeal data; compare, for each account, each feature content between the pieces of account appeal data, to determine a difference level of each feature content between the pieces of account appeal data of the account; determine, for each account, a correlation between the pieces of account appeal data of the account according to the difference level of each feature content between the pieces of account appeal data of the account, where the correlation includes a first correlation and a second correlation, the first correlation indicates that each feature content is the same, or a part of the feature contents is the same and the other part of the feature contents is similar, a type of each feature content which is the same meets a preset first type, and a type of each feature content which is similar meets a preset second type, the second correlation indicates that each feature content in multiple pieces of account appeal data for a same account is similar; and perform training by using a Bayes classification algorithm according to the correlation between the account appeal data of each account, collected account appeal data correlated with each other, and collected account appeal data uncorrelated with each other, to obtain the Bayes classification model.

Optionally, when determining for each account the correlation between the pieces of account appeal data of the account according to the difference level of each feature content between the pieces of account appeal data, the pretraining module 800 may be specifically configured to:
for each account, define a difference representation value of each feature content between the pieces of account appeal data according to a difference level of each feature content between the pieces of account appeal data, to obtain a corresponding difference representation value group between the pieces of account appeal data, where the difference representation value includes a first value that indicates that a feature content is the same and a second value that indicates that a feature content is similar, and the first value is different from the second value; and for each account, create a difference representation value table corresponding to the account according to the corresponding difference representation value group between the pieces of account appeal data, and use the difference representation value table to represent the correlation between the account appeal data of the account.

Correspondingly, when performing training by using the Bayes classification algorithm according to the correlation between the account appeal data of all the accounts, collected account appeal data correlated with each other and collected account appeal data uncorrelated with each other, to obtain the Bayes classification model, the pretraining module 800 may be specifically configured to:
perform training by using the Bayes classification algorithm according to the difference representation value table corresponding to each account, the collected account appeal data correlated with each other, and the collected account appeal data uncorrelated with each other, to obtain the Bayes classification model.

Optionally, the account ownership determining module 400 is configured to determine that the first account belongs to the first user after it is determined that the first account appeal data is correlated with the second account appeal data, if it was previously determined, based on the second account appeal data, that the first account belongs to a second user submitting the second account appeal data.

Optionally, the account ownership determining module 400 is further configured to: combine the first account appeal data and the second account appeal data after it is determined that the first account appeal data is correlated with the second account appeal data, to obtain combined account appeal data, and determine, by using the combined account appeal data, that the first account belongs to the first user.

The server provided in this embodiment of the present disclosure can determine account appeal data correlated with each other, and provide a help to determine account ownership and increase accuracy of a result of determining the account ownership.

A hardware structure of the server provided in this embodiment of the present disclosure may be as shown in FIG. 19, which includes: a processor 1, a communications interface 2, a memory 3, and a communications bus 4.

The processor 1, the communications interface 2, and the memory 3 communicate with each other via the communications bus 4.

Optionally, the communications interface 2 may be an interface of a communications module, such as an interface of a GSM module;
the processor 1 is configured to execute a program;
the memory 3 is configured to store the program; and
the program may include program code, and the program code includes a computer operating instruction.

The processor 1 may be a central processing unit (CPU) or an application specific integrated circuit (ASIC) or may be one or more integrated circuits configured for implementing the embodiments of the present disclosure.

The memory 3 may include a high-speed RAM memory, or may further include a non-volatile memory, such as at least one magnetic disk memory.

The program may be specifically used for:
obtaining first account appeal data for a first account submitted by a first user, each piece of account appeal data including at least one feature content;
comparing, if there is second account appeal data for the first account, the feature content of the first account appeal data with the feature content of the second account appeal data, to determine a correlation between the first account appeal data and the second account appeal data;
determining, if the correlation meets a preset correlation condition, that the first account appeal data is correlated with the second account appeal data; and
determining, according to one or more of the first account appeal data and the second account appeal data, that the first account belongs to the first user; and
the communications interface is configured to: if it is determined that the first account belongs to the first user, send a password of the first account to the first user or receive a password of the first account that is entered by the first user, to allow the first user to operate the first account by using the password.

An embodiment of the present disclosure further provides an account appeal processing system. A structure of the system may be as shown in FIG. 1, which includes: a server and at least one terminal.

The terminal is configured to obtain first account appeal data for a first account submitted by a first user, where each piece of account appeal data includes at least one feature content.

The server is configured to: obtain first account appeal data for a first account, where each piece of account appeal data includes at least one feature content; compare, if there is second account appeal data for the first account, each feature content of the first account appeal data with each feature content of the second account appeal data, to determine a correlation between the first account appeal data and the second account appeal data; determine, if the correlation meets a preset correlation condition, that the first account appeal data is correlated with the second account appeal data; determine, according to one or more of the first account appeal data and the second account appeal data, that the first account belongs to the first user; and if determining that the first account belongs to the first user, send a password of the first account to the first user or receive a password of the first account that is entered by the first user, to allow the first user to operate the first account by using the password.

It should be noted that the embodiments in this specification are all described in a progressive manner. Description of each of the embodiments focuses on differences from other embodiments, and reference may be made to each other for the same or similar parts among respective embodiments. The apparatus embodiments are substantially similar to the method embodiments and therefore are only briefly described, and reference may be made to the method embodiments for the relevant part.

Persons skilled in the art may further realize that, in combination with the embodiments herein, units and algorithm, steps of each example described can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. Persons skilled in the art can use different methods to implement the described functions for each particular application, but it should not be considered that the implementation goes beyond the scope of the present disclosure.

In combination with the embodiments herein, steps of the method or algorithm described may be directly implemented using hardware, a software module executed by a processor, or the combination thereof. The software module may be placed in a random access memory (RAM), a memory, a read-only memory (ROM), an electrically programmable ROM (EPROM), an electrically erasable programmable ROM (EEPROM), a register, a hard disk, a removable magnetic disk, a CD-ROM, or any storage medium of other forms well-known in the technical field.

The above description of the disclosed embodiments enables persons skilled in the art to implement or use the present disclosure. Various modifications to these embodiments are obvious to persons skilled in the art, the general principles defined in this document may be implemented in other embodiments without departing from the scope of the present disclosure. Therefore, the present disclosure is not limited to these embodiments illustrated in the present disclosure, but conforms to the broadest scope consistent with the principles and novel features disclosed in this document.

## Claims

1. An account appeal processing method, comprising:
obtaining first account appeal data for a first account submitted by a first user, each piece of account appeal data comprising at least one feature content;
comparing, if there is second account appeal data for the first account, the feature content of the first account appeal data with the feature content of the second account appeal data, to determine a correlation between the first account appeal data and the second account appeal data;
determining, if the correlation meets a preset correlation condition, that the first account appeal data is correlated with the second account appeal data;
combining the first account appeal data with the second account appeal data after it is determined that the first account appeal data is correlated with the second account appeal data, to obtain combined account appeal data;
determining, by using the combined account appeal data, whether the first account belongs to the first user;
sending a password of the first account to the first user or receiving a password of the first account that is entered by the first user, if it is determined that the first account belongs to the first user, to allow the first user to operate the first account by using the password.

2. The account appeal processing method according to claim 1, wherein if there are a plurality of feature contents, the comparing the feature content of the first account appeal data with the feature content of the second account appeal data, to determine a correlation between the first account appeal data and the second account appeal data comprises:
comparing the feature contents of the first account appeal data with the feature contents of the second account appeal data respectively, to determine a difference level of each of the feature contents; and
determining the correlation between the first account appeal data and the second account appeal data according to the difference level of each of the feature contents.

3. The account appeal processing method according to claim 2, wherein the difference level comprises: a level that the feature content is the same and a level that the feature content is similar; and the method further comprises:
determining, if the correlation between the first account appeal data and the second account appeal data meets a first correlation, that the correlation meets the preset correlation condition, wherein
that the correlation between the first account appeal data and the second account appeal data meets the first correlation comprises one of the following items:
each of the feature contents is the same; and
a part of the feature contents is the same, the other part of the feature contents is similar, a type of each feature content which is the same meets a preset first type, and a type of each feature content which is similar meets a preset second type.

4. The account appeal processing method according to claim 2, wherein the determining the correlation between the first account appeal data and the second account appeal data according to the difference level of each of the feature contents comprises:
classifying the difference level of each of the feature contents using a pretrained Bayes classification model, to obtain a probability that the first account appeal data is correlated with the second account appeal data, and using the probability to represent the correlation; and
the method further comprises:
determining, if the probability meets a preset probability condition, that the correlation meets the preset correlation condition.

5. The account appeal processing method according to claim 2, wherein the difference level comprises: a level that the feature content is the same and a level that the feature content is similar; and the determining the correlation between the first account appeal data and the second account appeal data according to the difference level of each of the feature contents comprises:
classifying the difference level of each of the feature contents using a pretrained Bayes classification model if the correlation between the first account appeal data and the second account appeal data does not meet a first correlation, to obtain a probability that the first account appeal data is correlated with the second account appeal data, and using the probability to represent the correlation, wherein
that the correlation does not meet a first correlation comprises one or more of the following items:
none of the feature contents is the same;
each feature content of a preset first type is not the same; and
each feature content of a preset second type is not similar, and
the method further comprises:
determining, if the probability meets a preset probability condition, that the correlation meets the preset correlation condition.

6. The account appeal processing method according to claim 4 or 5, wherein the method further comprises: pretraining the Bayes classification model, wherein
the pretraining the Bayes classification model comprises:
collecting a plurality of pieces of account appeal data of a plurality of accounts, wherein each account corresponds to a plurality of pieces of account appeal data;
comparing, for each account, each of the feature contents between the pieces of account appeal data of the account, to determine a difference level of each of the feature contents between the pieces of account appeal data of the account;
determining, for each account, a correlation between the pieces of account appeal data of the account according to the difference level of each of the feature content between the pieces of account appeal data of the account, wherein the correlation comprises a first correlation and a second correlation, the first correlation indicates that each of the feature contents is the same, or a part of the feature contents is the same and the other part of the feature contents is similar, a type of each feature content which is the same meets a preset first type, and a type of each feature content which is similar meets a preset second type, and the second correlation indicates that each of the feature contents in the plurality of pieces of account appeal data for a same account is similar; and
performing training by using a Bayes classification algorithm according to the correlation between the pieces of account appeal data of each account, collected account appeal data correlated with each other, and collected account appeal data uncorrelated with each other, to obtain the Bayes classification model.

7. The account appeal processing method according to claim 6, wherein the determining, for each account, a correlation between the pieces of account appeal data of the account according to the difference level of each of the feature contents between the pieces of account appeal data of the account comprises:
defining, for each account, a difference representation value of each of the feature contents between the pieces of account appeal data according to the difference level of each of the feature content between the pieces of account appeal data, to obtain a corresponding difference representation value group between the pieces of account appeal data, wherein the difference representation value comprises a first value indicating that a feature content is the same and a second value indicating that a feature content is similar, and the first value is different from the second value; and
creating, for each account, a difference representation value table corresponding to the account according to the corresponding difference representation value group between the pieces of account appeal data, and using the difference representation value table to represent the correlation between the account appeal data of the account.

8. The account appeal processing method according to claim 7, wherein the performing training by using a Bayes classification algorithm according to the correlation between the pieces of account appeal data of each accounts, collected account appeal data correlated with each other, and collected account appeal data uncorrelated with each other, to obtain the Bayes classification model comprises:
performing training by using the Bayes classification algorithm according to the difference representation value table corresponding to each account, the collected account appeal data correlated with each other, and the collected account appeal data uncorrelated with each other, to obtain the Bayes classification model.

9. A server, comprising:
an account appeal data obtaining module, configured to obtain first account appeal data for a first account submitted by a first user, each piece of account appeal data comprising at least one feature content;
a correlation determining module, configured to compare, if there is second account appeal data for the first account, the feature content of the first account appeal data with the feature content of the second account appeal data, to determine a correlation between the first account appeal data and the second account appeal data;
an association determining module, configured to determine, if the correlation meets a preset correlation condition, that the first account appeal data is correlated with the second account appeal data;
an account ownership determining module, configured to combine the first account appeal data and the second account appeal data after it is determined that the first account appeal data is correlated with the second account appeal data, to obtain combined account appeal data, and determine, by using the combined account appeal data, whether the first account belongs to the first user; and
a communications module, configured to: send a password of the first account to the first user or receive a password of the first account that is entered by the first user, if it is determined that the first account belongs to the first user, to allow the first user to operate the first account by using the password.

10. The server according to claim 9, wherein the correlation determining module comprises:
a difference level determining unit, configured to compare, if there are a plurality of feature contents, the feature contents of the first account appeal data with the feature contents of the second account appeal data respectively, to determine a difference level of each of the feature contents; and
a correlation determining execution unit, configured to determine the correlation between the first account appeal data and the second account appeal data according to the difference level of each of the feature contents.

11. The server according to claim 10, wherein the difference level comprises:
a level that the feature content is the same and a level that the feature content is similar; and the server further comprises:
a correlation condition first meeting determining module, configured to determine, if the correlation between the first account appeal data and the second account appeal data meets a first correlation, that the correlation meets the preset correlation condition, wherein
that the correlation between the first account appeal data and the second account appeal data meets the first correlation comprises one of the following items:
each of the feature contents is the same; and
a part of the feature contents is the same, the other part of the feature contents is similar, a type of each feature content which is the same meets a preset first type, and a type of each feature content which is similar meets a preset second type.

12. The server according to claim 10, wherein the correlation determining execution unit comprises:
an association probability determining subunit, configured to: classify the difference level of each of the feature contents using a pretrained Bayes classification model, to obtain a probability that the first account appeal data is correlated with the second account appeal data, and use the probability to represent the correlation; and
the server further comprises:
a correlation condition second meeting determining module, configured to determine, if the probability meets a preset probability condition, that the correlation meets the preset correlation condition.

13. The server according to claim 10, wherein the difference level comprises:
a level that the feature content is the same and a level that the feature content is similar; and the correlation determining execution unit comprises:
a joint execution subunit, configured to: classify the difference level of each of the feature contents using a pretrained Bayes classification model if the correlation between the first account appeal data and the second account appeal data does not meet a first correlation, to obtain a probability that the first account appeal data is correlated with the second account appeal data, and use the probability to represent the correlation, wherein
that the correlation does not meet a first correlation comprises one or more of the following items:
none of the feature contents is the same;
each feature content of a preset first type is not the same; and
each feature content of a preset second type is not similar.

## Patentansprüche

1. Verfahren zum Bearbeiten von Kontobeschwerden, umfassend:
Erhalten von ersten Kontobeschwerdedaten für ein erstes Konto, die von einem ersten Benutzer eingereicht wurden, wobei jedes Stück von Kontobeschwerdedaten mindestens einen Merkmalsinhalt umfasst;
Vergleichen, falls es zweite Kontobeschwerdedaten für das erste Konto gibt, des Merkmalsinhalts der ersten Kontobeschwerdedaten mit dem Merkmalsinhalt der zweiten Kontobeschwerdedaten, um eine Korrelation zwischen den ersten Kontobeschwerdedaten und den zweiten Kontobeschwerdedaten zu bestimmen;
Bestimmen, falls die Korrelation einer voreingestellten Korrelationsbedingung entspricht, dass die ersten Kontobeschwerdedaten mit den zweiten Kontobeschwerdedaten korreliert sind;
Kombinieren der ersten Kontobeschwerdedaten mit den zweiten Kontobeschwerdedaten, nachdem bestimmt wird, dass die ersten Kontobeschwerdedaten mit den zweiten Kontobeschwerdedaten korreliert sind, um kombinierte Kontobeschwerdedaten zu erhalten;
Bestimmen, unter Verwendung der kombinierten Kontobeschwerdedaten, ob das erste Konto dem ersten Benutzer gehört;
Senden eines Passworts des ersten Kontos an den ersten Benutzer oder Empfangen eines Passworts des ersten Kontos, das vom ersten Benutzer eingegeben wird, wenn bestimmt wird, dass das erste Konto dem ersten Benutzer gehört, um es dem ersten Benutzer zu ermöglichen, das erste Konto unter Verwendung des Passworts zu benutzen.

2. Verfahren zum Bearbeiten von Kontobeschwerden gemäß Anspruch 1, wobei, falls es eine Mehrzahl von Merkmalsinhalten gibt, das Vergleichen des Merkmalsinhalts der ersten Kontobeschwerdedaten mit dem Merkmalsinhalt der zweiten Kontobeschwerdedaten, um eine Korrelation zwischen den ersten Kontobeschwerdedaten und den zweiten Kontobeschwerdedaten zu bestimmen, umfasst:
Vergleichen jeweils der Merkmalsinhalte der ersten Kontobeschwerdedaten mit den Merkmalsinhalten der zweiten Kontobeschwerdedaten, um einen Differenzlevel von jedem der Merkmalsinhalte zu bestimmen; und
Bestimmen der Korrelation zwischen den ersten Kontobeschwerdedaten und den zweiten Kontobeschwerdedaten gemäß dem Differenzlevel von jedem der Merkmalsinhalte.

3. Verfahren zum Bearbeiten von Kontobeschwerden gemäß Anspruch 2, wobei der Differenzlevel umfasst: einen Level, dass der Merkmalsinhalt derselbe ist, und einen Level, dass der Merkmalsinhalt ähnlich ist; und das Verfahren des Weiteren umfasst:
Bestimmen, falls die Korrelation zwischen den ersten Kontobeschwerdedaten und den zweiten Kontobeschwerdedaten einer ersten Korrelation entspricht, dass die Korrelation der voreingestellten Korrelationsbedingung entspricht, wobei
dass die Korrelation zwischen ersten Kontobeschwerdedaten und den zweiten Kontobeschwerdedaten der ersten Korrelation entspricht, einen der folgenden Punkte umfasst:
jeder der Merkmalsinhalte ist derselbe; und
ein Teil der Merkmalsinhalte ist derselbe, der andere Teil der Merkmalsinhalte ist ähnlich, ein Typ von jedem Merkmalsinhalt, der derselbe ist, entspricht einem voreingestellten ersten Typ, und ein Typ von jedem Merkmalsinhalt, der ähnlich ist, entspricht einem voreingestellten zweiten Typ.

4. Verfahren zum Bearbeiten von Kontobeschwerden gemäß Anspruch 2, wobei das Bestimmen der Korrelation zwischen den ersten Kontobeschwerdedaten und den zweiten Kontobeschwerdedaten gemäß dem Differenzlevel von jedem der Merkmalsinhalte umfasst:
Klassifizieren des Differenzlevels von jedem der Merkmalsinhalte unter Verwendung eines vortrainierten Bayes-Klassifikationsmodells, um eine Wahrscheinlichkeit zu erhalten, dass die ersten Kontobeschwerdedaten mit den zweiten Kontobeschwerdedaten korreliert sind, und Verwenden der Wahrscheinlichkeit, um die Korrelation zu repräsentieren; und
das Verfahren des Weiteren umfasst:
Bestimmen, falls die Wahrscheinlichkeit einer voreingestellten Wahrscheinlichkeitsbedingung entspricht, dass die Korrelation der voreingestellten Korrelationsbedingung entspricht.

5. Verfahren zum Bearbeiten von Kontobeschwerden gemäß Anspruch 2, wobei der Differenzlevel umfasst: einen Level, dass der Merkmalsinhalt derselbe ist, und einen Level, dass der Merkmalsinhalt ähnlich ist; und das Bestimmen der Korrelation zwischen den ersten Kontobeschwerdedaten und den zweiten Kontobeschwerdedaten gemäß dem Differenzlevel von jedem der Merkmalsinhalte umfasst:
Klassifizieren des Differenzlevels von jedem der Merkmalsinhalte unter Verwendung eines vortrainierten Bayes-Klassifizierungsmodells, falls die Korrelation zwischen den ersten Kontobeschwerdedaten und den zweiten Kontobeschwerdedaten nicht einer ersten Korrelation entspricht, um eine Wahrscheinlichkeit zu erhalten, dass die ersten Kontobeschwerdedaten mit den zweiten Kontobeschwerdedaten korreliert sind, und Verwenden der Wahrscheinlichkeit, um die Korrelation zu repräsentieren, wobei
dass die Korrelation nicht einer ersten Korrelation entspricht, einen oder mehrere der folgenden Punkte umfasst:
keiner der Merkmalsinhalte ist derselbe;
jeder Merkmalsinhalt eines voreingestellten ersten Typs ist nicht derselbe; und
jeder Merkmalsinhalt eines voreingestellten zweiten Typs ist nicht ähnlich, und des Verfahren des Weiteren umfasst:
Bestimmen, falls die Wahrscheinlichkeit einer voreingestellten Wahrscheinlichkeitsbedingung entspricht, dass die Korrelation der voreingestellten Korrelationsbedingung entspricht.

6. Verfahren zum Bearbeiten von Kontobeschwerden gemäß Anspruch 4 oder 5, wobei das Verfahren des Weiteren umfasst: Vortrainieren des Bayes-Klassifikationsmodells, wobei
das Vortrainieren des Bayes-Klassifikationsmodells umfasst:
Sammeln einer Mehrzahl von Stücken von Kontobeschwerdedaten einer Mehrzahl von Konten, wobei jedes Konto einer Mehrzahl von Stücken von Kontobeschwerdedaten entspricht;
Vergleichen, für jedes Konto, von jedem der Merkmalsinhalte zwischen den Stücken von Kontobeschwerdedaten des Kontos, um einen Differenzlevel von jedem der Merkmalsinhalte zwischen den Stücken von Kontobeschwerdedaten des Kontos zu bestimmen;
Bestimmen, für jedes Konto, einer Korrelation zwischen den Stücken von Kontobeschwerdedaten des Kontos gemäß dem Differenzlevel von jedem der Merkmalsinhalte zwischen den Stücken von Kontobeschwerdedaten des Kontos, wobei die Korrelation eine erste Korrelation und eine zweite Korrelation umfasst, wobei die erste Korrelation anzeigt, dass jeder der Merkmalsinhalte derselbe ist, oder ein Teil der Merkmalsinhalte derselbe ist und der andere Teil der Merkmalsinhalte ähnlich ist, ein Typ von jedem Merkmalsinhalt, der derselbe ist, einem voreingestellten ersten Typ entspricht, und ein Typ von jedem Merkmalsinhalt, der ähnlich ist, einem voreingestellten zweiten Typ entspricht, und die zweite Korrelation anzeigt, dass jeder der Merkmalsinhalte in der Mehrzahl von Stücken von Kontobeschwerdedaten für ein selbes Konto ähnlich ist; und
Durchführen von Training unter Verwendung eines Bayes-Klassifikationsalgorithmus gemäß der Korrelation zwischen den Stücken von Kontobeschwerdedaten von jedem Konto, von gesammelten Kontobeschwerdedaten, die miteinander korreliert sind, und von gesammelten Kontobeschwerdedaten, die nicht miteinander korreliert sind, um das Bayes-Klassifikationsmodell zu erhalten.

7. Verfahren zum Bearbeiten von Kontobeschwerden gemäß Anspruch 6, wobei das Bestimmen, für jedes Konto, einer Korrelation zwischen den Stücken von Kontobeschwerdedaten des Kontos gemäß dem Differenzlevel von jedem der Merkmalsinhalte zwischen den Stücken von Kontobeschwerdedaten des Kontos umfasst:
Definieren, für jedes Konto, eines Differenzrepräsentationswertes von jedem der Merkmalsinhalts zwischen den Stücken von Kontobeschwerdedaten gemäß dem Differenzlevel von jedem der Merkmalsinhalte zwischen den Stücken von Kontobeschwerdedaten, um eine entsprechende Differenzrepräsentationswertgruppe zwischen den Stücken von Kontobeschwerdedaten zu erhalten, wobei der Differenzrepräsentationswert einen ersten Wert umfasst, der anzeigt, dass ein Merkmalsinhalt derselbe ist, und einen zweiten Wert, der anzeigt, dass ein Merkmalsinhalt ähnlich ist, und der erste Wert sich von dem zweiten Wert unterscheidet; und
Erzeugen, für jedes Konto, einer Differenzrepräsentationswerttabelle, die dem Konto gemäß der entsprechenden Differenzrepräsentationswertgruppe zwischen den Stücken von Kontobeschwerdedaten entspricht, und Verwenden der Differenzrepräsentationswerttabelle, um die Korrelation zwischen den Kontobeschwerdedaten des Kontos zu repräsentieren.

8. Verfahren zum Bearbeiten von Kontobeschwerden gemäß Anspruch 7, wobei das Durchführen von Training unter Verwendung eines Bayes-Klassifikationsalgorithmus gemäß der Korrelation zwischen den Stücken von Kontobeschwerdedaten jedes Kontos, von gesammelten Kontobeschwerdedaten, die miteinander korreliert sind, und von gesammelten Kontobeschwerdedaten, die nicht miteinander korreliert sind, um das Bayes-Klassifikationsmodell zu erhalten, umfasst:
Durchführen von Training unter Verwendung des Bayes-Klassifikationsalgorithmus gemäß der Differenzrepräsentationswerttabelle, die jedem Konto entspricht, der gesammelten Kontobeschwerdedaten, die miteinander korreliert sind, und der gesammelten Kontobeschwerdedaten, die nicht miteinander korreliert sind, um das Bayes-Klassifikationsmodell zu erhalten.

9. Server, umfassend:
ein Modul zum Erhalten von Kontobeschwerdedaten, das so konfiguriert ist, dass es erste Kontobeschwerdedaten für ein erstes Konto erhält, die von einem ersten Benutzer eingereicht wurden, wobei jedes Stück von Kontobeschwerdedaten mindestens einen Merkmalsinhalt umfasst;
ein Modul zum Bestimmen einer Korrelation, das so konfiguriert ist, dass es, falls es zweite Kontobeschwerdedaten für das erste Konto gibt, den Merkmalsinhalt der ersten Kontobeschwerdedaten mit dem Merkmalsinhalt der zweiten Kontobeschwerdedaten vergleicht, um eine Korrelation zwischen den ersten Kontobeschwerdedaten und den zweiten Kontobeschwerdedaten zu bestimmen;
ein Modul zum Bestimmen einer Assoziation, das so konfiguriert ist, dass es, falls die Korrelation einer voreingestellten Korrelationsbedingung entspricht, bestimmt, dass die ersten Kontobeschwerdedaten mit den zweiten Kontobeschwerdedaten korreliert sind;
ein Modul zum Bestimmen eines Kontoeigentums, das konfiguriert ist, dass es die ersten Kontobeschwerdedaten und die zweiten Kontobeschwerdedaten kombiniert, nachdem bestimmt wird, dass die ersten Kontobeschwerdedaten mit den zweiten Kontobeschwerdedaten korreliert sind, um kombinierte Kontobeschwerdedaten zu erhalten, und unter Verwendung der kombinierten Kontobeschwerdedaten bestimmt, ob das erste Konto dem ersten Benutzer gehört; und
ein Kommunikationsmodul, das so konfiguriert ist, dass es ein Passwort des ersten Kontos an den ersten Benutzer sendet oder ein Passwort des ersten Kontos, das vom ersten Benutzer eingegeben wird, erhält, wenn bestimmt wird, dass das erste Konto dem ersten Benutzer gehört, um dem ersten Benutzer zu ermöglichen, das erste Konto unter Verwendung des Passworts zu benutzen.

10. Server gemäß Anspruch 9, wobei das Modul zum Bestimmen einer Korrelation umfasst:
eine Einheit zum Bestimmen eines Differenzlevels, die so konfiguriert ist, dass sie, falls es eine Mehrzahl von Merkmalsinhalten gibt, jeweils die Merkmalsinhalte der ersten Kontobeschwerdedaten mit den Merkmalsinhalten der zweiten Kontobeschwerdedaten vergleicht, um einen Differenzlevel von jedem der Merkmalsinhalte zu bestimmen; und
eine Einheit zum Ausführen des Bestimmens der Korrelation, die so konfiguriert ist, dass sie die Korrelation zwischen den ersten Kontobeschwerdedaten und den zweiten Kontobeschwerdedaten gemäß dem Differenzlevel von jedem der Merkmalsinhalte bestimmt.

11. Server gemäß Anspruch 10, wobei der Differenzlevel umfasst: einen Level, dass der Merkmalsinhalt derselbe ist, und einen Level, dass der Merkmalsinhalt ähnlich ist; und der Server des Weiteren umfasst:
ein Modul zum Bestimmen, dass einer ersten Korrelationsbedingung entsprochen wird, das so konfiguriert ist, dass es bestimmt, falls die Korrelation zwischen den ersten Kontobeschwerdedaten und den zweiten Kontobeschwerdedaten einer ersten Korrelation entspricht, dass die Korrelation der voreingestellten Korrelationsbedingung entspricht, wobei
dass die Korrelation zwischen ersten Kontobeschwerdedaten und den zweiten Kontobeschwerdedaten der ersten Korrelation entspricht, einen der folgenden Punkte umfasst:
jeder der Merkmalsinhalte ist derselbe; und
ein Teil der Merkmalsinhalte ist derselbe, der andere Teil der Merkmalsinhalte ist ähnlich, ein Typ von jedem Merkmalsinhalt, der derselbe ist, entspricht einem voreingestellten ersten Typ, und ein Typ von jedem Merkmalsinhalt, der ähnlich ist, entspricht einem voreingestellten zweiten Typ.

12. Server gemäß Anspruch 10, wobei die Einheit zum Ausführen des Bestimmens der Korrelation umfasst:
eine Untereinheit zum Bestimmen einer Assoziationswahrscheinlichkeit, die so konfiguriert ist, dass sie den Differenzlevel von jedem der Merkmalsinhalte unter Verwendung eines vortrainierten Bayes-Klassifikationsmodells klassifiziert, um eine Wahrscheinlichkeit zu erhalten, dass die ersten Kontobeschwerdedaten mit den zweiten Kontobeschwerdedaten korreliert sind, und die Wahrscheinlichkeit verwendet, um die Korrelation zu repräsentieren; und
der Server des Weiteren umfasst:
ein Modul zum Bestimmen, dass einer zweiten Korrelationsbedingung entsprochen wird, das so konfiguriert ist, dass es, falls die Wahrscheinlichkeit einer voreingestellten Wahrscheinlichkeitsbedingung entspricht, bestimmt, dass die Korrelation der voreingestellten Korrelationsbedingung entspricht.

13. Server gemäß Anspruch 10, wobei der Differenzlevel umfasst: einen Level, dass der Merkmalsinhalt derselbe ist, und einen Level, dass der Merkmalsinhalt ähnlich ist; und die Einheit zum Ausführen des Bestimmens der Korrelation umfasst:
eine Untereinheit zum gemeinsamen Ausführen, die so konfiguriert ist, dass sie den Differenzlevel von jedem der Merkmalsinhalte unter Verwendung eines vortrainierten Bayes-Klassifikationsmodells klassifiziert, falls die Korrelation zwischen den ersten Kontobeschwerdedaten und den zweiten Kontobeschwerdedaten nicht einer ersten Korrelation entspricht, um eine Wahrscheinlichkeit zu erhalten, dass die ersten Kontobeschwerdedaten mit den zweiten Kontobeschwerdedaten korreliert sind, und die Wahrscheinlichkeit verwendet, um die Korrelation zu repräsentieren, wobei
dass die Korrelation nicht einer ersten Korrelation entspricht, einen oder mehrere der folgenden Punkte umfasst:
keiner der Merkmalsinhalte ist derselbe;
jeder Merkmalsinhalt eines voreingestellten ersten Typs ist nicht derselbe; und
jeder Merkmalsinhalt eines voreingestellten zweiten Typs ist nicht ähnlich.

## Revendications

1. Procédé de traitement de réclamations de compte comprenant:
obtenir de premières données de réclamation de compte pour un premier compte soumises par un premier utilisateur, chaque pièce de données de réclamation de compte comprenant au moins un contenu de caractéristique;
comparer, s'il y a de deuxièmes données de réclamation de compte pour le premier compte, le contenu de caractéristique des premières données de réclamation de compte avec le contenu de caractéristique des deuxièmes données de réclamation de compte, pour déterminer une corrélation entre les premières données de réclamation de compte et les deuxièmes données de réclamation de compte;
déterminer, si la corrélation satisfait à une condition de corrélation prédéfinie, que les premières données de réclamation de compte sont corrélées avec les deuxièmes données de réclamation de compte;
combiner les premières données de réclamation de compte avec les deuxièmes données de réclamation de compte après qu'il est déterminé que les premières données de réclamation de compte sont corrélées avec les deuxièmes données de réclamation de compte, pour obtenir des données de réclamation de compte combinées;
déterminer, en utilisant les données de réclamation de compte combinées, si le premier compte appartient au premier utilisateur;
envoyer un mot de passe du premier compte au premier utilisateur ou recevoir un mot de passe du premier compte qui est entré par le premier utilisateur, s'il est déterminé que le premier compte appartient au premier utilisateur, pour permettre au premier utilisateur d'utiliser le premier compte en utilisant le mot de passe.

2. Procédé de traitement de réclamations de compte selon la revendication 1, dans lequel, s'il y a une pluralité de contenus de caractéristique, la comparaison du contenu de caractéristique des premières données de réclamation de compte avec le contenu de caractéristique des deuxièmes données de réclamation de compte, pour déterminer une corrélation entre les premières données de réclamation de compte et les deuxièmes données de réclamation de compte, comprend:
comparer les contenus de caractéristique des premières données de réclamation de compte avec les contenus de caractéristique des deuxièmes données de réclamation de compte respectivement, pour déterminer un niveau de différence de chacun des contenus de caractéristique; et
déterminer la corrélation entre les premières données de réclamation de compte et les deuxièmes données de réclamation de compte selon le niveau de différence de chacun des contenus de caractéristique.

3. Procédé de traitement de réclamations de compte selon la revendication 2, dans lequel le niveau de différence comprend: un niveau que le contenu de caractéristique est le même et un niveau que le contenu de caractéristique est similaire, et le procédé comprend en outre:
déterminer, si la corrélation entre les premières données de réclamation de compte et les deuxièmes données de réclamation de compte satisfait à une première corrélation, que la corrélation satisfait à la condition de corrélation prédéfinie, dans lequel
que la corrélation entre les premières données de réclamation de compte et les deuxièmes données de réclamation de compte satisfait à la première corrélation comprend l'un des points suivants:
chacun des contenus de caractéristique est le même; et
une partie des contenus de caractéristique est la même, l'autre partie des contenus de caractéristique est similaire, un type de chaque contenu de caractéristique qui est le même répond à un premier type prédéfini, et un type de chaque contenu de caractéristique qui est similaire répond à un deuxième type prédéfini.

4. Procédé de traitement de réclamations de compte selon la revendication 2, dans lequel la détermination de la corrélation entre les premières données de réclamation de compte et les deuxièmes données de réclamation de compte selon le niveau de différence de chacun des contenus de caractéristique comprend:
classer le niveau de différence de chacun des contenus de caractéristique en utilisant un modèle de classification Bayes pré-entraîné, pour obtenir une probabilité que les premières données de réclamation de compte soient corrélées avec les deuxièmes données de réclamation de compte, et utiliser la probabilité pour représenter la corrélation; et
ledit procédé comprend en outre:
déterminer, si la probabilité satisfait à une condition de probabilité prédéfinie, que la corrélation satisfait à la condition de corrélation prédéfinie.

5. Procédé de traitement de réclamations de compte selon la revendication 2, dans lequel le niveau de différence comprend: un niveau que le contenu de caractéristique est le même et un niveau que le contenu de caractéristique est similaire; et la détermination de la corrélation entre les premières données de réclamation de compte et les deuxièmes données de réclamation de compte selon le niveau de différence de chacun des contenus de caractéristique comprend:
classer le niveau de différence de chacun des contenus de caractéristique en utilisant un modèle de classification Bayes pré-entraîné si la corrélation entre les premières données de réclamation de compte et les deuxièmes données de réclamation de compte ne répond pas à une première corrélation, pour obtenir une probabilité que les premières données de réclamation de compte soient corrélées avec les deuxièmes données de réclamation de compte, et utiliser la probabilité pour représenter la corrélation, dans lequel
que la corrélation ne répond pas à une première corrélation comprend un ou plusieurs des points suivants:
aucun des contenus de caractéristique n'est le même;
chaque contenu de caractéristique d'un premier type prédéfini n'est pas le même; et
chaque contenu de caractéristique d'un deuxième type prédéfini n'est pas similaire; et
ledit procédé comprend en outre:
déterminer, si la probabilité satisfait à une condition de probabilité prédéfinie, que la corrélation satisfait à la condition de corrélation prédéfinie.

6. Procédé de traitement de réclamations de compte selon la revendication 4 ou 5, dans lequel le procédé comprend en outre: pré-entraîner le modèle de classification de Bayes, dans lequel
le pré-entraînement du modèle de classification de Bayes comprend:
collecter une pluralité de pièces de données de réclamation de compte d'une pluralité de comptes, dans lequel chaque compte correspond à une pluralité de pièces de données de réclamation de compte;
comparer, pour chaque compte, chacun des contenus de caractéristique entre les pièces de données de réclamation de compte du compte, pour déterminer un niveau de différence de chacun des contenus de caractéristique entre les pièces de données de réclamation de compte du compte;
déterminer, pour chaque compte, une corrélation entre les pièces de données de réclamation de compte du compte selon le niveau de différence de chacun des contenus de caractéristique entre les pièces de données de réclamation de compte du compte, la corrélation comprenant une première corrélation et une deuxième corrélation, la première corrélation indique que chacun des contenus de caractéristique est le même, ou qu'une partie des contenus de caractéristique est la même et l'autre partie des contenus de caractéristique est similaire, un type de chaque contenu de caractéristique qui est le même répond à un premier type prédéfini, et un type de chaque contenu de caractéristique qui est similaire répond à un deuxième type prédéfini, et la deuxième corrélation indique que chacun des contenus de caractéristique dans la pluralité de pièces de données de réclamation de compte pour un même compte est similaire; et
effectuer un entraînement en utilisant un algorithme de classification Bayes selon la corrélation entre les pièces de données de réclamation de compte de chaque compte, des données de réclamation de compte collectées qui sont corrélées les unes avec les autres, et des données de réclamation de compte collectées qui ne sont pas corrélées les unes avec les autres, pour obtenir le modèle de classification Bayes.

7. Procédé de traitement de réclamations de compte selon la revendication 6, dans lequel la détermination, pour chaque compte, d'une corrélation entre les pièces de données de réclamation de compte du compte selon le niveau de différence de chacun des contenus de caractéristique entre les pièces de données de réclamation de compte du compte comprend:
définir, pour chaque compte, une valeur de représentation de différence de chacun des contenus de caractéristique entre les pièces de données de réclamation de compte selon le niveau de différence de chacun des contenus de caractéristique entre les pièces de données de réclamation de compte, pour obtenir un groupe de valeurs de représentation de différence correspondant entre les pièces de données de réclamation de compte, dans lequel la valeur de représentation de différence comprend une première valeur indiquant qu'un contenu de caractéristique est le même et une deuxième valeur indiquant qu'un contenu de caractéristique est similaire, et la première valeur est différente de la deuxième valeur; et
créer, pour chaque compte, un tableau de valeurs de représentation de différence correspondant au compte selon le groupe de valeurs de représentation de différence correspondant entre les pièces de données de réclamation de compte, et utiliser le tableau de valeurs de représentation de différence pour représenter la corrélation entre les données de réclamation de compte du compte.

8. Procédé de traitement de réclamations de compte selon la revendication 7, dans lequel la mise en œuvre de l'entraînement en utilisant un algorithme de classification Bayes selon la corrélation entre les pièces de données de réclamation de compte de chaque compte, des données de réclamation de compte collectées corrélées les unes avec les autres, et des données de réclamation de compte collectées non corrélées les unes avec les autres, pour obtenir le modèle de classification de Bayes comprend:
effectuer un entraînement en utilisant l'algorithme de classification de Bayes selon le tableau de valeurs de représentation de différence correspondant à chaque compte, les données de réclamation de compte collectées corrélées les unes avec les autres et les données de réclamation de compte collectées non corrélées les unes avec les autres, pour obtenir le modèle de classification Bayes.

9. Serveur comprenant:
un module d'obtention de données de réclamation de compte, configuré pour obtenir de premières données de réclamation de compte pour un premier compte soumises par un premier utilisateur, chaque pièce de données de réclamation de compte comprenant au moins un contenu de caractéristique;
un module de détermination de corrélation configuré pour comparer, s'il y a de deuxièmes données de réclamation de compte pour le premier compte, le contenu de caractéristique des premières données de réclamation de compte avec le contenu de caractéristique des deuxièmes données de réclamation de compte, pour déterminer une corrélation entre les premières données de réclamation de compte et les deuxièmes données de réclamation de compte;
un module de détermination d'association configuré pour déterminer, si la corrélation satisfait à une condition de corrélation prédéfinie, que les premières données de réclamation de compte sont corrélées avec les deuxièmes données de réclamation de compte;
un module de détermination d'une propriété de compte qui est configuré pour combiner les premières données de réclamation de compte avec les deuxièmes données de réclamation de compte après qu'il est déterminé que les premières données de réclamation de compte sont corrélées avec les deuxièmes données de réclamation de compte, pour obtenir des données de réclamation de compte combinées, et pour déterminer, en utilisant les données de réclamation de compte combinées, si le premier compte appartient au premier utilisateur; et
un module de communication configuré pour: envoyer un mot de passe du premier compte au premier utilisateur ou recevoir un mot de passe du premier compte qui est entré par le premier utilisateur, s'il est déterminé que le premier compte appartient au premier utilisateur, pour permettre au premier utilisateur d'utiliser le premier compte en utilisant le mot de passe.

10. Serveur selon la revendication 9, dans lequel le module de détermination de corrélation comprend:
une unité de détermination de niveau de différence configurée pour comparer, s'il y a une pluralité de contenus de caractéristique, les contenus de caractéristique des premières données de réclamation de compte avec les contenus de caractéristique des deuxièmes données de réclamation de compte respectivement, pour déterminer un niveau de différence de chacun des contenus de caractéristique, et
une unité de mise en oeuvre de détermination de corrélation configurée pour déterminer la corrélation entre les premières données de réclamation de compte et les deuxièmes données de réclamation de compte selon le niveau de différence de chacun des contenus de caractéristique.

11. Serveur selon la revendication 10, dans lequel le niveau de différence comprend: un niveau que le contenu de caractéristique est le même et un niveau que le contenu de caractéristique est similaire, et le serveur comprend en outre:
un module destiné à déterminer qu'une première condition de corrélation est satisfaite, qui est configuré pour déterminer, si la corrélation entre les premières données de réclamation de compte et les deuxièmes données de réclamation de compte satisfait à une première corrélation, que la corrélation satisfait à la condition de corrélation prédéfinie, dans lequel
que la corrélation entre les premières données de réclamation de compte et les deuxièmes données de réclamation de compte satisfait à la première corrélation comprend l'un des points suivants:
chacun des contenus de caractéristique est le même; et
une partie des contenus de caractéristique est la même, l'autre partie des contenus de caractéristique est similaire, un type de chaque contenu de caractéristique qui est le même répond à un premier type prédéfini, et un type de chaque contenu de caractéristique qui est similaire répond à un deuxième type prédéfini.

12. Serveur selon la revendication 10, dans lequel l'unité de mise en oeuvre de détermination de corrélation comprend:
une sous-unité de détermination de probabilité d'association, qui est configurée pour: classer le niveau de différence de chacun des contenus de caractéristique en utilisant un modèle de classification Bayes pré-entraîné, pour obtenir une probabilité que les premières données de réclamation de compte soient corrélées avec les deuxièmes données de réclamation de compte, et utiliser la probabilité pour représenter la corrélation; et
le serveur comprend en outre:
un module destiné à déterminer qu'une deuxième condition de corrélation est satisfaite, qui est configuré pour déterminer, si la probabilité satisfait à une condition de probabilité prédéfinie, que la corrélation satisfait à la condition de corrélation prédéfinie.

13. Serveur selon la revendication 10, dans lequel le niveau de différence comprend: un niveau que le contenu de caractéristique est le même et un niveau que le contenu de caractéristique est similaire; et l'unité d'exécution de détermination de corrélation comprend:
une sous-unité d'exécution conjointe qui est configurée pour: classer le niveau de différence de chacun des contenus de caractéristique en utilisant un modèle de classification Bayes pré-entraîné si la corrélation entre les premières données de réclamation de compte et les deuxièmes données de réclamation de compte ne répond pas à une première corrélation, pour obtenir une probabilité que les premières données de réclamation de compte soient corrélées avec les deuxièmes données de réclamation de compte, et pour utiliser la probabilité pour représenter la corrélation, dans lequel
que la corrélation ne répond pas à une première corrélation comprend un ou plusieurs des points suivants:
aucun des contenus de caractéristique n'est le même;
chaque contenu de caractéristique d'un premier type prédéfini n'est pas le même; et
chaque contenu de caractéristique d'un deuxième type prédéfini n'est pas similaire.
